# EUROPÄISCHE PATENTSCHRIFT

(11) **EP 3 393 946 B1**
(45) Veröffentlichungstag und Bekanntmachung des Hinweises auf die Patenterteilung: **23.11.2022**
(21) Anmeldenummer: 16809363.1
(22) Anmeldetag: 08.12.2016
(51) Int. Cl.: B65G 54/02, H02K 41/03

(54) **LINEARES TRANSPORTSYSTEM MIT MINIMALER TRANSPORTTEILUNG**
LINEAR TRANSPORT SYSTEM WITH MINIMAL TRANSPORT SPACING
SYSTÈME DE TRANSPORT LINÉAIRE PRÉSENTANT UN ÉCART MINIMAL ENTRE LES OBJETS TRANSPORTÉS

(30) Priorität: 21.12.2015 DE 102015226139
(43) Veröffentlichungstag der Anmeldung: 31.10.2018
(73) Patentinhaber: KRONES AG, 93073 Neutraubling (DE)
(72) Erfinder: NEUBAUER, Michael, 93073 Neutraubling (DE)
(74) Vertreter: Grünecker Patent- und Rechtsanwälte PartG mbB
(86) Internationale Anmeldenummer: PCT/EP2016/080193
(87) Internationale Veröffentlichungsnummer: WO 2017/108423

(56) Entgegenhaltungen:
- DE-C1- 19 510 281
- JP-A- H1 017 125
- US-B2- 9 056 720

## Beschreibung

### Gebiet der Erfindung

Die vorliegende Erfindung betrifft eine Vorrichtung zum gesteuerten Bewegen von einzeln steuerbaren Transportelementen zum Transport von Behältern, Gebinden, Etiketten, Verschlüssen oder sonstiger Packmitteln, insbesondere von Flaschen oder Dosen, in einer Anlage zur Behandlung der Behälter.

### Stand der Technik

Transportsysteme mit Linearmotorantrieb, sogenannte lineare Transportsysteme, sind im Stand der Technik wohlbekannt. Prominentestes Beispiel sind Personenschnellzüge auf der Basis von Magnetschwebetechnik. Transportsysteme mit Linearmotorantrieb werden jedoch auch in vielen Bereichen der Industrie, insbesondere zum individuellen Transport von Stückgut innerhalb von Produktionslinien eingesetzt.

In der DE 10 2013 218 389 A1 ist beispielsweise ein lineares Transportsystem mit einer Vielzahl von Magnetläufern zum Transport von Flaschen in einer Behälterbehandlungsanlage beschrieben. Die die Flaschen transportierenden Läufer bewegen sich dabei angetrieben durch die magnetische Wechselwirkung zwischen einem Permanent- und/oder Elektromagnete tragenden Sekundärteil der Läufer und zwei Langstatoren entlang zweier parallel geführter Führungsschienen, die mit dem jeweiligen Langstator verbunden sind. Dabei sind die Läufer über Rollen an den Führungsschienen gelagert und haben in der Ebene der Rollenlager im Allgemeinen ein Fahrgestell mit einer rechteckigen Form, wobei in Längsrichtung der Läufer nur geringfügig voneinander beabstandete Rollenpaare an der jeweiligen Führungsschiene angreifen.

DE 10 2013 218 389 A1 sowie US 9 056 720 B2 offenbaren ein Transportsystem gemäß dem Oberbegriff des Anspruchs 1.

Für die Gestaltung der Läufer ergeben sich in der Praxis widersprüchliche Anforderungen. Einerseits sollen die Läufer in Längsrichtung, d. h. in Bewegungsrichtung, eine möglichst große Ausdehnung haben, um den Verschleiß und die Belastung der Lagerelemente, im Allgemeinen der Rollen, zu reduzieren. Zudem können die Rollen bei einem langen Läufer kleiner ausgebildet werden als bei einem kurzen Läufer. Alternativ kann der Läufer bei gleicher Dimensionierung der Lagerelemente mehr Last aufnehmen.

Umgekehrt ist es erstrebenswert, die Läufer möglichst kurz auszubilden, damit der Abstand der von ihnen transportierten Behälter oder Objekte in dem sich ergebenden Behälterstrom, die sogenannte Transportteilung, möglichst klein und somit der Durchsatz von Behältern pro Zeiteinheit einer das Transportsystem einsetzenden Behälterbehandlungsanlage möglichst groß sein kann. Falls jeder Läufer genau einen Behälter transportiert, ergibt sich beispielsweise die minimal erreichbare Teilung, wenn aufeinanderfolgende Läufer auf Stoß fahren. Diese minimal erreichbare Teilung entspricht somit der maximalen Längsausdehnung der Läufer, sofern die Behälter kleiner als die Läufer sind. Ebenso ist eine geringe Längsausdehnung der Läufer wünschenswert, um kleine Behälter im aufgestauten Zustand an einer Übergabestelle von einem Transportband aufnehmen zu können.

Bei der Bestimmung der minimal erreichbaren Transportteilung ist im Allgemeinen die Ausdehnung des Fahrwerks der Läufer der limitierende Faktor, da dieses die Lage bzw. den Abstand der Lagerelemente, beispielsweise der Rollen, bestimmt. Darüber hinaus kann jedoch auch die Ausdehnung des Sekundärteils in Transportrichtung, welches üblicherweise eine Trägerplatte und darauf angebrachte Magnete aufweist, einer Reduzierung der minimal erreichbaren Transportteilung im Wege stehen. Beispielsweise ist die Ausdehnung der Magnete in Transportrichtung durch die Gestaltung der Spulen des Langstators vorgegeben und kann somit nicht beliebig reduziert werden, wobei üblicherweise eine Sequenz aus mehreren abwechselnd gepolten Magneten in Bewegungsrichtung, d. h. Längsrichtung, der Läufer vorgesehen ist, um eine optimale Vortriebskraft zu erzielen. Die Längsausdehnung dieser Sequenz definiert dabei die minimal realisierbare Längsausdehnung der Sekundärteile und setzt somit eine untere Grenze für die minimal erreichbare Transportteilung.

In der Praxis liegt die minimal erreichbare Transportteilung sogar noch deutlich über dieser Längsausdehnung der Sekundärteile, weil sich die Sekundärteile unmittelbar aufeinanderfolgender Läufer bei zu großer Annäherung je nach Polarisierung der Magnete der benachbarten Sequenzenden entweder stark anziehen oder stark abstoßen würden. In beiden Fällen würden die entstehenden Kräfte die Vortriebskraft des Linearmotors bei weitem übersteigen, weshalb eine gesteuerte Bewegung der Läufer nicht mehr möglich wäre. Aus diesem Grund verbleibt in der Praxis stets ein ausreichend großer Spalt zwischen den Sekundärteilen aufeinanderfolgender Läufer.

Für manche Anwendungen, insbesondere in der Getränke verarbeitenden Industrie, ist es jedoch wünschenswert einen möglichst kleinen Teilungsabstand zwischen zwei Läufern zu erreichen. Beispielsweise ist es wünschenswert, die Preforms von Kunststoffflaschen, beispielsweise PET-Flaschen, mit einem Teilungsabstand von 36 mm oder weniger zu einem Infrarot-Ofen einer Streckblasmaschine zu führen. Dies ist mit den bisher bekannten Sekundärteilen mit einer Längsausdehnung von 45 mm oder mehr jedoch nicht möglich.

Es liegt somit der vorliegenden Erfindung die Aufgabe zugrunde, ein lineares Transportsystem bereitzustellen, welches eine möglichst kleine Transportteilung gestattet, ohne negative Auswirkungen auf die Steuerbarkeit der Läufer zu haben. Zudem sollen Verschleiß und Belastung der Lagerelemente der Läufer reduziert werden. Ganz allgemein liegt der vorliegenden Erfindung die Aufgabe zugrunde, den Durchsatz eines linearen Transportsystems bei gleichzeitig geringem Wartungsaufwand zu steigern.

### Beschreibung der Erfindung

Die oben genannten Aufgaben werden gelöst durch die Merkmale des Anspruchs 1.

Bei Behälterbehandlungsanlagen werden Behälter, wie z. B. Flaschen, Dosen, usw., in einem oder mehreren aufeinanderfolgenden Prozessschritten behandelt. Dabei werden im Allgemeinen die Prozessschritte bzw. Arbeitsschritte in separaten Behandlungseinheiten durchgeführt, die beispielsweise als Module eines gemeinsamen Anlagenkonzepts zusammengestellt werden können. Eine Behälterbehandlungsanlage für Kunststoffflaschen, z. B. aus Polyethylenterephthalat (PET), Polypropylen (PEP), usw., kann beispielsweise eine Heizvorrichtung zum Erwärmen der Vorformlinge, eine Streckblasvorrichtung zum Expandieren und Strecken der Vorformlinge zu Kunststoffflaschen, eine Reinigungsvorrichtung, eine Etikettiervorrichtung, eine Füllvorrichtung, eine Sortiervorrichtung, eine Verpackungsvorrichtung, eine Sterilisationsvorrichtung, eine Inspektionsvorrichtung, eine Temperiervorrichtung, eine Kühlvorrichtung, eine Beschichtungsvorrichtung, eine Puffervorrichtung, usw. als separate, modular ausgeführte Behandlungseinheiten umfassen. Die einzelnen Behandlungseinheiten, welche aufeinanderfolgende Prozessschritte durchführen, sind dabei im Allgemeinen in Reihe hintereinander geschaltet, wobei eine oder mehrere Transportvorrichtungen den Transport der Behälter von den Behandlungseinheiten zu den jeweiligen nachgeschalteten Behandlungseinheiten übernehmen.

Die vorliegende Erfindung betrifft ein solches Transportsystem zum Transport von Behältern in einer Behälterbehandlungsanlage. Zum Transport der Behälter entlang einer Prozessstrecke in einer Behälterbehandlungsanlage umfasst das Transportsystem erfindungsgemäß eine Vielzahl von Transportelementen zum Transportieren eines oder mehrerer Behälter, wobei die Transportelemente bewegbar an einer Transportbahn des Transportsystems angeordnet sind. Die Anzahl der Transportelemente an der Transportbahn ist dabei prinzipiell beliebig und lediglich durch die Länge der Transportbahn begrenzt. Zur Aufnahme mindestens eines Behälters an einer Aufnahmestelle und zur Abgabe der Behälter an einer Abgabestelle können die Transportelemente mit einer geeigneten Haltevorrichtung zum Halten eines oder mehrerer Behälter, z. B. in Form eines Greifelements, ausgestattet sein. Das Greifelement kann dabei passiv oder aktiv steuerbar ausgebildet sein. Insbesondere sind Greifelemente zum formschlüssigen oder kraftschlüssigen Greifen eines Halsbereichs der Behälter, z. B. des sogenannten Neckrings zum Neckhandling von Kunststoffflaschen vorstellbar, wobei der gehaltene Behälter beim formschlüssigen Greifen um seine Längsachse drehbar in dem Greifelement gelagert sein kann. Zudem kann das Greifelement schwenkbar und/oder höhenverstellbar ausgebildet sein.

Behälter sind insbesondere Getränkeflaschen, aber auch andere Behälter für Lebensmittel, Medikamente, Hygieneartikel, Reinigungsmittel oder dergleichen, wie z. B. Dosen, Glasflaschen oder andere Glasbehälter mit Deckel, Verpackungen auf der Basis von Karton oder Verbundstoffen, Tetrapack oder Ähnliches. Ebenso sind bei Behältern aus Kunststoff auch Zwischenprodukte, insbesondere Vorformlinge zum Streckblasen der Behälter vorstellbar. Des Weiteren sind unter Behältern auch zusammengestellte Gebinde mit mehreren Behältern zu verstehen.

Die Transportelemente können als Läufer, Puck, Schlitten, Shuttle oder dergleichen ausgebildet sein, welche erfindungsgemäß durch magnetische Wechselwirkung mit wenigstens einem Langstator eines Linearmotors, d. h. einem Linearmotorstrang, der Transportbahn entlang der Transportbahn bewegt werden können. Jedes Transportelement kann dabei je nach Bedarf an der Transportbahn beschleunigt, abgebremst, mit konstanter Geschwindigkeit bewegt oder auch zeitweise ganz angehalten werden. Durch individuelles Steuern der Transportelemente lässt sich somit ein variables Weg-Zeit-Profil jedes einzelnen Transportelements realisieren.

Erfindungsgemäß weist die Transportbahn des Transportsystems wenigstens einen, vorzugsweise sogar zwei, Langstatoren eines Linearmotors auf. Die Form der Transportbahn ist dabei grundsätzlich beliebig. Insbesondere kann die Transportbahn im Wesentlichen geschlossen sein, wobei im Wesentlichen geschlossen bedeutet, dass die Transportbahn mindestens einen geschlossenen Weg für die Transportelemente ermöglicht. Darüber hinaus kann die Transportbahn durch Einfügen einer oder mehrerer Weichen beliebig viele Verzweigungen aufweisen.

Die Transportbahn kann weiterhin wenigstens eine Führungsschiene aufweisen, an welcher die Transportelemente mittels eines oder mehrerer Lagerelemente bewegbar gelagert sind. Insbesondere kann die Transportbahn zwei parallel geführte Führungsschienen in Form eines Doppelschienensystems, wie z. B. bei Eisenbahngleisen, aufweisen. Der oder die Langstatoren können dabei parallel zu den jeweiligen Führungsschienen oder, beispielsweise mittig, zwischen diesen angeordnet sein. Eine Vielzahl von Ausführungen der Führungsschienen und Langstatoren ist im Stand der Technik bekannt.

Die Form und der Querschnitt der Führungsschienen sind dabei beliebig und lediglich durch die Ausführung der Transportelemente sowie der Lagerelemente der Transportelemente, mit welchen die Transportelemente bewegbar an den Führungsschienen gelagert sind, bestimmt. Z. B. kann jede Führungsschiene einen Führungskanal, in welchem ein Führungsstift der Transportelemente geführt wird, und/oder einen Spurkranz aufweisen, auf welchem eine oder mehrere geeignet angeordnete Führungsrollen der Transportelemente abrollen. Eine Vielzahl alternativer Ausführungsformen, z. B. mittels eines Gleitlagers, ist hier vorstellbar. Durch das Bereitstellen von Führungsschienen an der Transportbahn kann eine reibungsarme Bewegung der Transportelemente entlang der Transportbahn ermöglicht werden. Darüber hinaus kann die Transportbahn über eine Lauffläche verfügen, auf welcher entsprechende Stützelemente, z. B. Stützrollen, abrollen bzw. gleiten können.

Erfindungsgemäß weisen die Transportelemente jeweils wenigstens ein Sekundärteil zur magnetischen Wechselwirkung mit dem wenigstens einen Langstator auf. Hierzu ist wenigstens eine Sequenz, d. h. Abfolge in Längsrichtung des Transportelements, von im Allgemeinen benachbarten Permanentmagneten und/oder Elektromagneten, insbesondere nicht schaltenden Elektromagneten, abwechselnder Polung an dem Sekundärteil angebracht, welches beispielsweise in Form einer Trägerplatte ausgebildet sein kann. Je nach Ausbildung und Anordnung dieser Magnete, und je nachdem, ob ein einseitiger oder ein beidseitiger Linearmotorantrieb verwendet wird, können die Transportelemente auch zwei oder mehr Sekundärteile aufweisen. Beispielsweise kann für jeden Langstator ein eigenes Sekundärteil vorgesehen sein. In diesem Fall können die Anordnungen der Sequenzen von Magneten an den Sekundärteilen gleich oder verschieden, insbesondere gespiegelt, sein. Auch können die Teile der unten beschriebenen Sequenzen, die unterschiedliche Bereiche senkrecht zur Transportrichtung belegen, auf verschiedenen Sekundärteilen angeordnet sein. Zur Vereinfachung der Darstellung werden hier und im Folgenden ohne Einschränkung Transportelemente mit genau einem Sekundärteil angenommen. In einem besonderen Fall kann die Sequenz auch nur einen einzigen Magneten einer bestimmten Polung aufweisen. In diesem Fall belegen die Sequenzen der Sekundärteile aufeinander folgender Transportelemente überschneidungsfreie Bereiche senkrecht zur Transportrichtung.

Der wenigstens eine Langstator kann insbesondere als synchroner Linearmotor ausgebildet sein. In einer alternativen Ausführung kann der Langstator auch als asynchroner Linearmotor ausgebildet sein, wobei mindestens ein Permanentmagnet und/oder nicht schaltender Elektromagnet des Sekundärteils der Transportelemente und/oder ein elektrisch leitendes Element der Transportelemente, z. B. in Form einer metallischen Platte, an welcher der Permanentmagnet und/oder nicht schaltende Elektromagnet angebracht sind, als elektrische Leiter für die Induktion durch die asynchronen Linearmotoren fungieren. Für die magnetische Wechselwirkung mit dem wenigstens einen Langstator können die Transportelemente wie erwähnt jeweils über ein Sekundärteil verfügen, welches mit wenigstens einer Sequenz von Permanentmagneten und/oder Elektromagneten, im Folgenden kurz als Magneten des Sekundärteils bezeichnet, ausgestattet ist, wobei das Sekundärteil derart ausgebildet ist, dass das jeweilige Transportelement durch magnetische Wechselwirkung mit dem wenigstens einen Langstator der Transportbahn entlang der Transportbahn bewegt werden kann.

Der wenigstens eine Langstator des Linearmotors kann in einer besonders einfachen Ausführung durch eine Vielzahl entlang des Linearmotorstranges angeordneter elektrischer Wicklungen in Form von einzeln oder blockweise ansteuerbaren Elektromagneten gebildet werden. Hierbei sind auch komplexere Ausführungen, z. B. mittels einer Halbachanordnung der Elektromagnete zur Verstärkung des magnetischen Flusses auf der dem Sekundärteil zugewandten Seite, denkbar. Das Transportelement kann als passives Transportelement ausgebildet sein, welches über ein Sekundärteil mit mindestens einer Sequenz von Permanentmagneten und/oder nicht schaltenden Elektromagneten durch Wechselwirkung mit den von den einzeln ansteuerbaren Elektromagneten des Linearmotors erzeugten elektromagnetischen Wechselfeldern bewegt wird. Ein nicht schaltender Elektromagnet ist dabei derart mit einer Stromversorgung und/oder einer Regeleinheit des Transportsystems verbunden, dass er stets in derselben Richtung von einem, vorzugsweise regelbaren, elektrischen Strom durchflossen wird. Alternativ kann das Transportelement als aktives Transportelement mit elektrischen Wicklungen, d. h. einer Sequenz von schaltenden Elektromagneten, versehen sein, welche die für den Antrieb notwendigen magnetischen Wechselfelder aufbringen können. Entsprechend wird der wenigstens eine Langstator der Transportbahn in dieser Weiterbildung mit Permanentmagneten bzw. nicht schaltenden Elektromagneten versehen.

In einer Ausführung können die Magnete der wenigstens einen Sequenz quer zur Transportbahn gerichtet an dem Sekundärteil des Transportelements angeordnet sein, sodass je einer der magnetischen Pole jedes Magneten mit einem ersten Langstator wechselwirken kann, während der andere magnetische Pol mit einem zweiten Langstator wechselwirken kann. Alternativ können die dem ersten Langstator und dem zweiten Langstator zugewandten Seiten des Sekundärteils jedoch auch separate Sequenzen von Magneten aufweisen, welche insbesondere in Halbachanordnung zur Verstärkung des magnetischen Flusses in Richtung des jeweiligen Linearmotorstranges ausgebildet sein können. Des Weiteren ist auch eine Ausführung mit lediglich einem Langstator denkbar, wobei die Magnete des Sekundärteils insbesondere in Halbachanordnung angeordnet sein können. Eine Versorgung des mindestens einen nicht schaltenden Elektromagneten des Sekundärteils des Transportelements mit der benötigten elektrischen Energie kann über eine entlang der Transportbahn angeordnete elektrische Leitung oder Leistungsversorgungsschiene und über elektrische Kontakte des Transportelements, z. B. über Leistungssammelschuhe, erreicht werden. Alternativ ist eine Übertragung der benötigten elektrischen Energie via Induktion denkbar.

Bei Linearmotoren sind die Magnete der Transportelemente und des oder der Langstatoren im Allgemeinen derart ausgerichtet und dimensioniert, dass sie sich zu beiden Seiten eines Luftspalts gegenüberstehen, wobei in der Richtung senkrecht zur Transport- bzw. Bewegungsrichtung und entlang des Luftspalts im Allgemeinen ein möglichst großer Überlapp der sich gegenüberstehenden magnetischen Pole anvisiert wird, um eine optimale Vortriebskraft zu erzielen. Dabei sind zwei Grundkonfigurationen für die Orientierung und relative Anordnung von Führungsschiene(n), Langstator(en) und Sekundärteil denkbar.

In einer ersten Ausführung sind Führungsschiene(n), Langstator(en) und Sekundärteil derart angeordnet, dass der zwischen den Polen der Magnete des Sekundärteils und des Langstators vorhandene Luftspalt im Wesentlichen senkrecht zu einer Aufstandsfläche des Transportsystems bzw. der Behälterbehandlungsanlage ausgerichtet ist. In diesem "vertikalen" Fall sind die im Allgemeinen länglich ausgebildeten Pole der Magnete von Langstator und Sekundärteil ebenfalls im Wesentlichen senkrecht ausgerichtet. Gleiches gilt für eine Trägerplatte des Sekundärteils. Die Bewegungsrichtung und der Verlauf der wenigstens einen Führungsschiene ist hierbei im Wesentlichen horizontal, d. h. parallel zu der Aufstandsfläche angenommen. Bei einem beidseitigen Linearmotor verlaufen zudem die beiden Langstatoren parallel zueinander in einer horizontalen Ebene.

In einer zweiten, alternativen Ausführung sind die Führungsschiene(n), Langstator(en) und Sekundärteile derart angeordnet, dass der zwischen den Polen der Magnete des Sekundärteils und des Langstators vorhandene Luftspalt im Wesentlichen parallel zu der Aufstandsfläche des Transportsystems bzw. der Behälterbehandlungsanlage ausgerichtet ist. In diesem "horizontalen" Fall sind die im Allgemeinen länglich ausgebildeten Pole der Magnete von Langstator und Sekundärteil ebenfalls im Wesentlichen horizontal ausgerichtet. Gleiches gilt für eine Trägerplatte des Sekundärteils. Die Bewegungsrichtung und der Verlauf der wenigstens einen Führungsschiene ist hierbei ebenfalls im Wesentlichen horizontal, d. h. parallel zu der Aufstandsfläche angenommen. Bei einem beidseitigen Linearmotor verlaufen jedoch nunmehr die beiden Langstatoren parallel zueinander in einer vertikalen Ebene.

In beiden Ausführungen verläuft die Bewegung der Transportelemente in einer horizontalen Ebene. Es versteht sich jedoch, dass die oben genannte Transportbahn auch Steigungen, ja sogar vertikale Teilstücke, umfassen kann. Entsprechend sind die relativen Anordnungen von Führungsschienen, Langstatoren und Sekundärteilen an die Ausrichtung der Transportbahn anzupassen. Der Einfachheit der Beschreibung halber wird im Folgenden ohne Einschränkung eine horizontal ausgerichtete Transportbahn angenommen. Es versteht sich jedoch, dass die nachfolgend verwendeten Begriffe "senkrecht", "vertikal", "parallel" und "horizontal" kein absolutes Bezugssystem definieren, sondern in Bezug auf die Ausrichtung der Transportbahn zu verstehen sind, soweit nicht explizit etwas Anderes angegeben ist.

Wie erwähnt wird im Stand der Technik üblicherweise eine möglichst große Überlappung der sich gegenüberstehende Pole senkrecht zur Transportrichtung, d. h. parallel zur flächigen Ausdehnung des Luftspalts und senkrecht zur Transportrichtung, vorgesehen, um die magnetische Wechselwirkung zu maximieren. Gemäß der vorliegenden Weiterbildung ist jedoch eine Ausdehnung zumindest des ersten und des letzten Magneten in einer jeden Sequenz von Magneten der Sekundärteile der Transportelemente derart gegenüber dieser üblichen Überlappung reduziert und eine Anordnung zumindest des ersten und des letzten Magneten an dem jeweiligen Sekundärteil derart gewählt, dass die Magnete von benachbarten Sequenzenden zweier aufeinanderfolgender Transportelemente senkrecht zur Transportrichtung überschneidungsfreie Bereiche belegen.

Zwei aufeinanderfolgende Transportelemente sind dabei zwei entlang der Transportbahn unmittelbar benachbarte Transportelemente. Da die Sequenzen der Magnete der Sekundärteile der Transportelemente in Transportrichtung ausgerichtet sind, sind dabei mindestens die Magnete zweier benachbarter Sequenzenden, d. h. die Endmagnete der entsprechenden Sequenzen, zueinander in Transportrichtung benachbart. Ihre Anordnung ist somit neben der Ausbildung der Trägerplatte des Sekundärteils entscheidend für die minimal erreichbare Transportteilung. Weisen die Sekundärteile jeweils mehr als eine Sequenz von Magneten auf, beispielsweise zwei senkrecht zur Transportrichtung "übereinander" liegende Sequenzen, so gilt die obige Aussage der überschneidungsfreien Bereiche entsprechend.

Aufgrund der Ausdehnung ihrer Pole senkrecht zur Transportrichtung belegen die Magnete entsprechende Bereiche senkrecht zur Transportrichtung. Anders ausgedrückt entsprechen die Ausdehnungen der Magnete senkrecht zur Transportrichtung jeweiligen Bereichen auf einer Achse senkrecht zur Transportrichtung. Im obigen "vertikalen" Fall sind diese Bereiche vertikale Bereiche, während sie im obigen "horizontalen" Fall entsprechend horizontale Bereiche darstellen. Eine vollständige Überlappung der Bereiche zweier benachbarter Endmagnete würde somit bedeuten, dass sich die Pole dieser Endmagnete entlang ihrer gesamten Ausdehnung senkrecht zur Transportrichtung gegenüber stehen. Eine teilweise Überlappung der Bereiche zweier benachbarter Endmagnete entspräche demnach immer noch einer Anordnung senkrecht zur Transportrichtung, in der sich die Pole der Magnete teilweise gegenüber stehen.

Erfindungsgemäß sind jedoch zumindest der erste und der letzte Magnet jeder Sequenz derart an dem jeweiligen Sekundärteil angeordnet, dass die benachbarten Endmagnete überschneidungsfreie Bereiche senkrecht zur Transportrichtung belegen. Demzufolge stehen sich die Pole benachbarter Endmagnete nicht gegenüber und behindern sich somit auch nicht, weder durch ungewünschte magnetische Wechselwirkung noch mechanisch. Insbesondere können die belegten Bereiche mindestens einen Abstand von 1 mm, bevorzugt von 5 mm, besonders bevorzugt von 10 mm senkrecht zur Transportrichtung aufweisen, um ein "Ineinander Fahren" der Sekundärteile ohne übermäßige magnetische Wechselwirkung der benachbarten Endmagnete zu ermöglichen.

Die beschriebene Anordnung zumindest des ersten und des letzten Magneten an den Sekundärteilen gestattet es, den üblichen Mindestabstand zwischen aufeinander folgenden Transportelementen zu unterschreiten, indem beispielsweise der erste Magnet eines nachlaufenden Transportelements senkrecht zur Transportrichtung versetzt zum letzten Magnet eines vorauslaufenden Transportelements in eine Flucht mit diesem, d. h. auf eine Linie, gebracht wird, d. h. senkrecht zur Transportrichtung gesehen "über" oder "unter" diesem zu liegen kommt. Die Trägerplatten der beiden Sekundärteile können dabei derart ausgebildet sein, dass dieses Ineinander Fahren der Sequenzen von Magneten benachbarter Sekundärteile ohne Blockade durch die Trägerplatten möglich ist. Bei geeigneter Ausbildung der Fahrwerke der beiden Transportelemente kann somit eine minimale Transportteilung erreicht werden, die erheblich kleiner als bei den üblichen Transportelementen ist (siehe unten).

Die Transportelemente können mittels einer Steuer- und/oder Regeleinheit, z. B. in Form eines Prozessrechners, entlang der Transportbahn geführt werden. Die Steuer- und/oder Regeleinheit kann dabei als eine zentrale Steuer- und/oder Regeleinheit des Transportsystems und/oder durch dezentral an den Transportelementen angeordnete Steuer- und/oder Regeleinheiten realisiert werden. Des Weiteren können die eine oder mehrere Steuer- und/oder Regeleinheiten als speicherprogrammierbare Steuereinheit(en) SPS ausgebildet sein. Durch gezieltes Ansteuern einzelner Elektromagnete bzw. einzelner Blöcke von Elektromagneten des wenigstens einen Langstators in einem begrenzten Bereich der Transportbahn kann ein bestimmtes Transportelement gezielt beschleunigt und somit bewegt werden, sodass das Transportelement einzeln und unabhängig von anderen Transportelementen der Vielzahl von Transportelementen des Transportsystems entlang der Transportbahn geleitet werden kann. Dies ermöglicht auch das oben erwähnte Ineinander Fahren der Sekundärteile aufeinanderfolgender Transportelemente. Da die Sequenzen von Magneten dieser Transportelemente jedoch nicht vollständig ineinander gefahren werden können, kann jedes der Transportelemente stets durch geeignetes Ansteuern einzelner Elektromagnete der Langstatoren wieder aus der engen Stellung herausgefahren werden. Dazu können beispielsweise die den in einer Flucht stehenden Magneten entsprechenden Elektromagnete der Langstatoren deaktiviert werden, während die den übrigen Magneten entsprechenden Elektromagnete eine Beschleunigung des vorauslaufenden und/oder eine Verzögerung des nachlaufenden Transportelements bewirken können. Auf diese Weise können zuvor gebildete Züge von aufeinanderfolgenden Transportelemente wieder aufgelöst werden.

Das Ansteuern der Elektromagnete des Langstators erfolgt dabei mittels der Steuer- und/oder Regeleinheit des Transportsystems. Insbesondere kann die Stromstärke durch die elektrischen Wicklungen der Elektromagnete des Langstators einzeln von der Steuer- und/oder Regeleinheit automatisch in Abhängigkeit von einem Kraftbedarf des zu bewegenden Transportelements geregelt werden. Erfindungsgemäß kann das Transportelement durch individuelles Steuern und/oder Regeln der Stromstärke durch einzelne Wicklungen der Linearmotorstränge beschleunigt, abgebremst oder mit einer konstanten vorgegebenen Geschwindigkeit bewegt werden.

Die Transportelemente können, je nach Ausbildung der Führungsschiene, des Sekundärteils und/oder des wenigstens einen Langstators, vollständig mechanisch oder teilweise magnetisch und teilweise mechanisch an der Transportbahn gelagert sein. Bei teilweise magnetischer Lagerung ist die Transportbahn derart ausgebildet, dass die magnetische Wechselwirkung zwischen dem Sekundärteil des Transportelements und dem Langstator eine teilweise magnetische Levitation des Transportelements bewirkt und somit die mechanische Belastung der Lagerelemente reduziert. Zusätzlich verfügen die Transportelemente dabei über ein oder mehrere Stützelemente, z. B. in Form von Stützrollen und/oder Führungsrollen, welche auf der wenigstens einen Führungsschiene abrollen. Ebenso ist eine teilweise oder vollständig mechanische Lagerung mittels mindestens eines Gleitlagers denkbar. Besonders kostengünstig ist eine Ausführung der Lagerung der Transportelemente mittels Gleitlager, welche mit der Führungsschiene in Kontakt stehen. Zusätzliche Stützelemente bzw. Gleitlager können dabei auf einer zusätzlichen Lauffläche der Transportbahn rollen bzw. gleiten. Bei vollständig mechanischer Lagerung kann das Transportelement ausschließlich durch die beschriebenen Stützelemente bzw. Gleitlager gelagert sein.

Zum individuellen Steuern der Transportelemente entlang der Transportbahn können durch regelmäßige und periodische Anordnung von Sensoren entlang zumindest eines Abschnitts der Transportbahn die Positionen der Transportelemente auf diesem Abschnitt der Transportbahn bestimmt werden. Dabei können die Sensoren als optischer Sensor, elektrischer Sensor, elektromagnetischer Sensor oder mechanischer Sensor ausgebildet sein, wobei z. B. durch Messen einer Lichtreflektion an einem Reflektorelement der Transportelemente, durch Induktion eines elektromagnetischen Signals aufgrund der Bewegung der Transportelemente, durch Änderungen des elektrischen Widerstandes des Sensors unter Ausnutzung eines magnetoresistiven Effektes, z. B. aufgrund des magnetischen Flusses eines magnetischen Referenzelements, insbesondere eines Permanentmagneten, oder des Sekundärteils der Transportelemente, oder durch lokale Druckmessung aufgrund des Gewichts der Transportelemente die Position der Transportelemente im Bereich des Sensors bestimmt werden kann.

Gemäß einer Weiterbildung kann die Vielzahl der Transportelemente wenigstens eine erste und eine zweite Gruppe von Transportelementen umfassen, wobei die Magnete zumindest der Sequenzenden der Sekundärteile der Transportelemente der ersten Gruppe einen ersten Bereich belegen, und wobei die Magnete zumindest der Sequenzenden der Sekundärteile der Transportelemente der zweiten Gruppe einen zweiten, mit dem ersten Bereich überschneidungsfreien Bereich belegen. Gemäß dieser Weiterbildung belegen also zumindest der erste und der letzte Magnet der Sequenz eines Transportelements der ersten Gruppe den ersten Bereich, während zumindest der erste und der letzte Magnet der Sequenz eines Transportelements der zweiten Gruppe den zweiten Bereich belegen. Bei abwechselnder Anordnung von Transportelementen der ersten und der zweiten Gruppe an der Transportbahn können aufeinanderfolgende Transportelemente somit immer wenigstens soweit ineinander gefahren werden, dass sich benachbarte Sequenzenden in der Richtung senkrecht zur Transportrichtung wenigstens um einen Magnet überlappen.

Gemäß einer speziellen Weiterbildung können alle Magnete der Sekundärteile der Transportelemente der ersten Gruppe den ersten Bereich belegen und alle Magnete der Sekundärteile der Transportelemente der zweiten Gruppe den zweiten Bereich belegen. In diesem Fall belegen also die Sequenzen von Magneten der Transportelemente verschiedener Gruppen verschiedene Bereiche senkrecht zur Transportrichtung. Dies ist insbesondere dann der Fall, wenn die Sequenzen jeweils nur einen einzigen Magneten aufweisen. Entsprechendes kann auch für mehr als zwei Gruppen mit entsprechend mehr als zwei Bereichen gelten. Je nach Ausbildung der Trägerplatten der Sekundärteile können die Sequenzen benachbarter Transportelemente um mehr als einen Magnet übereinander gefahren werden.

Gemäß einer alternativen Weiterbildung kann die Anzahl der Magnete in jeder Sequenz ungerade sein, wobei jeweils zumindest der mittlere Magnet jeder Sequenz der Sekundärteile der Transportelemente der ersten und der zweiten Gruppe mindestens den ersten und den zweiten Bereich belegt. Insbesondere kann der mittlere Magnet die gewohnte Ausdehnung senkrecht zur Transportrichtung haben, die einen vollständigen Überlapp mit den Polen des entsprechenden Langstators erlaubt. Je nach Anzahl der Magnete in der Sequenz können auch drei, fünf, usw. Magnete eine solche Ausdehnung haben. Die mittleren Magnete der Sequenzen sind somit senkrecht zur Transportrichtung länger ausgebildet als die Magnete der Sequenzenden. Beispielsweise kann die Ausdehnung der mittleren Magnete 50 mm betragen, während die Ausdehnung der Magnete der Sequenzenden lediglich 22,5 mm beträgt. Durch die größere Ausdehnung des oder der mittleren Magnete kann die wirksame Vortriebskraft erhöht werden, sodass eine Erhöhung der Leistungsdaten des Transportsystem erzielt werden kann.

Gemäß einer Weiterbildung können die Magnete des einen Sequenzendes einer jeden Sequenz der Sekundärteile der Transportelemente einen ersten Bereich belegen, und die Magnete des anderen Sequenzendes einen zweiten, mit dem ersten Bereich überschneidungsfreien Bereich belegen. Die Sequenzen der Transportelemente haben somit jeweils einen Endmagnet, der den ersten Bereich belegt, sowie einen Endmagnet, der den zweiten Bereich belegt. Auch können jeweils zwei oder mehr Magnete an den Sequenzenden den ersten bzw. zweiten Bereich belegen. Die Anordnung der Magnete an dem Sekundärteil ist somit stufen- oder z-förmig. Bei gleichgerichteter Anordnung aller Transportelemente an der Transportbahn können dadurch Transportelemente beliebig aus dem Strom von Transportelementen ausgeschleust oder in diesen Strom eingefügt werden, ohne die minimal erreichbare Transportteilung zu beeinflussen.

Gemäß einer speziellen Weiterbildung, nicht Teil der Erfindung, kann die Anzahl der Magnete in jeder Sequenz ungerade sein, wobei jeweils zumindest der mittlere Magnet jeder Sequenz der Sekundärteile der Transportelemente mindestens den ersten und den zweiten Bereich belegt. Auch hier ist die stufen- bzw. z-förmige Anordnung der Magnete möglich, wobei der oder die mittlere Magnete sich wie oben beschrieben zur Erhöhung der Vortriebskraft mindestens über beide Bereiche erstrecken. Auch hier können Transportelemente beliebig ausgeschleust und eingeführt werden, ohne die minimal erreichbare Transportteilung eines Transportstroms zu beeinflussen.

In einem speziellen Fall, nicht Teil der Erfindung, kann genau der mittlere Magnet mindestens den ersten und zweiten Bereich belegen, wobei die Magnete zwischen dem mittleren Magnet und dem einen Sequenzende den ersten Bereich belegen, und wobei die Magnete zwischen dem mittleren Magnet und dem anderen Sequenzende den zweiten Bereich belegen. Somit belegen alle Magnete außer dem mittleren Magnet entweder den ersten oder den zweiten Bereich. Diese Konfiguration erlaubt ein besonders robustes Transportsystem mit hoher Vortriebskraft und hoher Selektivität der Ansteuerung.

Gemäß einer Weiterbildung kann der mindestens eine Langstator zwei oder mehr den überschneidungsfreien Bereichen entsprechende und parallel geführte Linearmotorstränge aufweisen, die unabhängig voneinander ansteuerbar sind. Die Elektromagnete dieser Linearmotorstränge, d. h. ihre Pole, erstrecken sich somit senkrecht zur Transportrichtung über überschneidungsfreie Bereiche, die den oben erwähnten ersten und zweiten Bereichen entsprechen und insbesondere vollständig mit ihnen überlappen können. Somit stehen den Magneten der Sequenzen, die den ersten Bereich belegen, die Elektromagnete des einen Linearmotorstrangs gegenüber, während den Magneten der Sequenzen, die den zweiten Bereich belegen, die Elektromagnete des anderen Linearmotorstrangs gegenüber stehen. Da sich die Linearmotorstränge zudem unabhängig voneinander ansteuern lassen, können auf die Magnete der Sequenzen in verschiedenen Bereichen auch unabhängig voneinander Vortriebs- bzw. Verzögerungskräfte ausgeübt werden. Auf diese Weise lassen sich die in einer Flucht "übereinander" liegenden Magnete benachbarter Sequenzen aufeinanderfolgender Transportelemente unabhängig voneinander beeinflussen, sodass Züge aus zwei oder mehr Transportelementen auf einfache Weise gebildet und wieder aufgelöst werden können.

Eine alternative oder ergänzende Weiterbildung kann eine mechanische Beschleunigungseinheit, insbesondere eine angetriebene Rolle oder ein angetriebenes Förderband, umfassen, welche derart an der Transportbahn angeordnet ist, dass passierende Transportelemente durch mechanischen Eingriff mit der Beschleunigungseinheit gezielt beschleunigt oder abgebremst werden können. Hierzu können die Transportelemente ein entsprechendes Oberflächenelement aufweisen, das in mechanischen Eingriff mit der Beschleunigungseinheit gebracht werden kann, beispielsweise indem die Beschleunigungseinheit näher an den Transportweg heran geschaltet wird. Durch Reibung mit einer angetriebenen Rolle oder einem angetriebenen Förderband kann das in Eingriff mit der Beschleunigungseinheit stehende Transportelement gezielt beschleunigt oder abgebremst werden, wodurch ein Zug von Transportelementen wieder aufgelöst werden kann.

Gemäß einer Weiterbildung können die Front- und Rückseiten sowie die Sekundärteile der Transportelemente derart geformt sein, dass die Transportelemente soweit ineinander gefahren werden können, dass sich eine minimal erreichbare Transportteilung ergibt, die geringer als die Längsausdehnung der Transportelemente ist. Unter der Frontseite eines Transportelements ist hier und im Folgenden die in Bewegungsrichtung gerichtete Seite des Transportelements zu verstehen. Entsprechend ist unter der Rückseite die der Bewegungsrichtung abgewandte Seite des Transportelements zu verstehen. Obwohl die Transportelemente mittels der oben genannten Steuereinheit entlang der Transportbahn im Allgemeinen sowohl vorwärts als auch rückwärts bewegt werden können, ergibt sich aufgrund der Prozessabfolge der Behälterbehandlungsanlage und der Anordnung der Transportbahn in der Behälterbehandlungsanlage eine bevorzugte Transportrichtung, sodass Front- und Rückseiten der an der Transportbahn angeordneten Transportelemente wohl definiert sind. Je nach Ausführung können die Transportelemente jedoch auch um 180 Grad gedreht an der Transportbahn angeordnet werden. In diesem Fall vertauschen sich die Rollen von Front- und Rückseite, ohne jedoch die Gültigkeit der oben genannten Relation dieser beiden Seiten zu berühren.

Die minimal erreichbare Transportteilung ist durch den Abstand sich entsprechender Referenzpunkte aufeinanderfolgender Transportelemente, beispielsweise der Schwerpunkte beförderter Behälter bzw. der Transportelemente, definiert, der erreicht werden kann, indem die aufeinanderfolgenden Transportelemente möglichst nah zueinander, im Extremfall auf Stoß, geführt werden. Dieser ist gemäß der vorliegenden Erfindung aufgrund entsprechender Ausformung der Front- und Rückseiten sowie der Sekundärteile der Transportelemente geringer als die Längsausdehnung der Transportelemente. Unter der Längsausdehnung der Transportelemente ist dabei hier und im Folgenden die maximale Ausdehnung der Transportelemente in Transportrichtung zu verstehen. Genauer gesagt sind die Front- und Rückseiten sowie die Sekundärteile der Transportelemente derart geformt, dass die Transportelemente wenigstens paarweise ineinander gefahren werden können. Beispielsweise können die Front- und Rückseiten sowie die Sekundärteile der Transportelemente derart geformt sein, dass die Frontseite und das Sekundärteil eines nachlaufenden Transportelements und die Rückseite und das Sekundärteil eines unmittelbar vorauslaufenden Transportelements ineinander gefahren werden können. Dies bedeutet, dass vorspringende Teile der Frontseite und des Sekundärteils des nachlaufenden Transportelements in entsprechende Ausnehmungen der Rückseite und des Sekundärteils des vorauslaufenden Transportelements und/oder vorspringende Teile der Rückseite und des Sekundärteils des vorauslaufenden Transportelements in entsprechende Ausnehmungen der Frontseite und des Sekundärteils des nachlaufenden Transportelements gefahren werden können. Die Front- und Rückseiten sowie Sekundärteile aufeinanderfolgender Transportelemente sind somit derart zusammenpassend geformt, dass sie gleich einer Verzahnung ineinander gefahren werden können. Beispielsweise kann die Kontur der Frontseite in einem der Transportebene entsprechenden Schnitt des nachlaufenden Transportelements in die Kontur der Rückseite in einem solchen Schnitt des vorauslaufenden Transportelements passen. Ebenso kann die Kontur der Frontseite des Sekundärteils eines nachlaufenden Transportelements in die Kontur der Rückseite des Sekundärteils eines vorauslaufenden Transportelements passen. Das Ineinander Fahren erfolgt dabei erfindungsgemäß ohne Verformung der Transportelemente, und kann insbesondere ohne mechanischen Kontakt der Transportelemente erfolgen.

Im einfachsten Fall sind alle Transportelemente derart gestaltet, dass dieses Verhältnis von Front- und Rückseite für die Front- und Rückseite und das Sekundärteil jedes einzelnen Transportelements selbst gilt. Insbesondere sind die Fahrwerke der Transportelemente also nicht spiegelsymmetrisch bzgl. einer Ebene quer zur Transportrichtung ausgebildet. Ein komplexerer Fall ergibt sich, wenn sich das Verhältnis von Front- zu Rückseite lediglich auf die Frontseite eines nachlaufenden und die Rückseite eines vorauslaufenden Transportelements bezieht. In diesem Fall können jeweils Paare von Transportelementen soweit ineinander gefahren werden, dass die minimal erreichbare Transportteilung kleiner als deren Längsausdehnung ist. Ein Spezialfall dieser Ausbildung wird weiter unten beschrieben, in dem aufeinanderfolgende Transportelemente um 180 Grad zueinander gedreht angeordnet sind. Bei der zuerst genannten gleichartigen Ausbildung der Transportelemente können jedoch ganze Züge bzw. Ketten von Transportelementen mit minimaler Transportteilung gebildet werden. Die zuerst genannte Ausbildung kann somit bevorzugt in Kombination mit der versetzten Anordnung der Magnete benachbarter Sequenzenden kombiniert werden.

Gemäß einer Weiterbildung können die Transportelemente jeweils in Längsrichtung voneinander beabstandete Lagerelemente, insbesondere Rollen, aufweisen, mittels derer die Transportelemente bewegbar an der Transportbahn, insbesondere an der zuvor erwähnten wenigstens einen Führungsschiene, gelagert sind, wobei die minimal erreichbare Transportteilung geringer als der maximale Abstand dieser Lagerelemente in Längsrichtung ist. Hierzu können die Lagerelemente insbesondere an geeigneten, vorspringenden Teilen der Front- und Rückseiten der Transportelemente angeordnet sein. Insbesondere können die Lagerelemente, beispielsweise Rollen, an den maximal vorspringenden Teilen der Transportelemente angebracht sein. Um sich nicht gegenseitig zu behindern, können die Rollen der Front- gegenüber den Rollen der Rückseite um 90 Grad verkippt angeordnet werden. Alternativ können die Rollen der Frontseite auf einer Innenseite einer Führungsschiene angreifen, während die Rollen der Rückseite auf einer Außenseite der Führungsschiene angreifen, oder umgekehrt, wobei Innen- und Außenseite bzgl. der Mittellinie eines Doppelschienensystems definiert sind.

Durch Vergrößerung des Abstandes der Lagerelemente können die Transportelemente wesentlich höhere Belastungen aufnehmen. Beispielsweise sind die Transportelemente wesentlich belastungsfähiger gegenüber senkrecht zur Bewegungsrichtung wirkenden Kräften, wie sie beispielsweise bei einem Drehmoment auf das Transportelement aufgrund der Behälterbehandlung auftreten können. Die Lagerelemente werden bei größerem Abstand weniger belastet. Werden die Transportelemente durch die magnetische Wechselwirkung selbst an der Transportbahn gehalten, so erhöht sich durch den vergrößerten Abstand die Betriebssicherheit, da die Transportelemente sicherer an einer Führungsschiene gehalten werden können. Bei gleichbleibendem Rollenabstand hingegen ermöglichen die erfindungsgemäßen Transportelemente eine kleinere Transportteilung und somit einen höheren Durchsatz an Behältern pro Zeiteinheit. Da der Transport in Behälterbehandlungsanlagen häufig zum limitierenden Faktor für den Durchsatz wird, machen die beschriebenen Weiterbildungen einen Einsatz von linearen Transportsystemen in der Getränke verarbeitenden Industrie wettbewerbsfähiger.

Gemäß einer speziellen Weiterbildung können die Sekundärteile der Transportelemente derart geformt und die Magnete der Sekundärteile aufeinanderfolgender Transportelemente derart an dem jeweiligen Sekundärteil angeordnet sein, dass das Sekundärteil eines nachlaufenden Transportelements soweit an das Sekundärteil eines vorauslaufenden Transportelements herangefahren werden kann, dass die Magnete der benachbarten Sequenzenden senkrecht zur Transportrichtung auf einer Linie liegen. Wie oben bereits beschrieben, bedeutet dies, dass die Magnete benachbarter Sequenzenden übereinander gefahren werden können, sodass sie, insbesondere bündig, in einer Flucht liegen. Aufgrund des oben erwähnten Abstandes zwischen den überschneidungsfreien Bereichen kommt es dabei nicht zu unerwünscht starken magnetischen Wechselwirkungen, die die Steuerung der Transportelemente negativ beeinflussen könnte. Im Wesentlichen können die Sekundärteile, insbesondere ihre Trägerplatten, derart geformt werden, dass sie zwar die jeweiligen Sequenzen von Magneten sicher halten, jedoch ansonsten keinen Raum einnehmen, der für das Ineinander Fahren der Sekundärteile aufeinanderfolgender Transportelemente benötigt würde. Durch die genannte Ausbildung der Sekundärteile können aufeinander folgende Transportelemente mit geeignet ausgebildeten Front- und Rückseiten auf eine Transportteilung aneinander herangefahren werden, die geringer als die maximale Längsausdehnung der Sekundärteile ist. Auf diese Weise kann ein besonders hoher Durchsatz an Behältern erzielt werden. Ebenso können besonders kleine Behälter, wie beispielsweise Preforms, mit einer optimalen Transportteilung befördert werden.

Gemäß einer Weiterbildung können die Transportelemente im Wesentlichen keil- oder winkelförmig ausgebildet sein, wobei aufeinanderfolgende Transportelemente um 180 Grad gedreht an der Transportbahn angeordnet sind. Dieses Drehen der Transportelemente bezieht sich hierbei lediglich auf das Fahrwerk, also die Lagerung und das Sekundärteil, der Transportelemente. Eventuelle Greifvorrichtungen oder Aufbauten werden selbstverständlich gemäß den Anforderungen der Prozessstrecke ausgerichtet. Eine im Wesentlichen Keil- oder Winkelform bedeutet dabei, dass eine Längsseite der Transportelemente eine größere Ausdehnung besitzt als die andere Längsseite. Auf diese Weise können um 180 Grad zueinander gedrehte Transportelemente soweit ineinander gefahren werden, dass die minimal erreichbare Transportteilung geringer als die Längsausdehnung der längeren Längsseite ist. Die Transportelemente werden dabei, wie oben erwähnt, paarweise ineinander gefahren.

Durch abwechselnd gedrehtes Anordnen gleichartiger Transportelemente dieser Art an einer Transportbahn bilden sich automatisch auch die oben erwähnten ersten und zweiten Gruppen von Transportelementen. Somit können insbesondere für jedes Transportelement der Vielzahl von Transportelementen alle Magnete der Sequenz des jeweiligen Sekundärteils derart angeordnet sein, dass sie ohne 180 Grad Drehung denselben Bereich senkrecht zur Transportrichtung wie für alle anderen Transportelemente belegen würden. Lediglich die Drehung bewirkt, dass die Magnete benachbarter Sequenzenden zweier aufeinanderfolgender Transportelemente wie oben beschrieben überschneidungsfreie Bereiche belegen. Gemäß dieser Weiterbildung können die Transportelemente auf besonders einfache Art und Weise hergestellt werden.

Gemäß einer alternativen Weiterbildung können die Transportelemente jeweils Rollen aufweisen, mittels derer sie an der Transportbahn gelagert sind, wobei deren Anordnung in einer Ebene des Fahrwerks inversionssymmetrisch ist. Die Rollenanordnung hat somit eine C₂ Symmetrie. Das Fahrwerk dieser Transportelemente hat beispielsweise eine Treppen- oder Z-Form, welche besonders stabil gegen Drehmomente ist. Aufgrund der inversionssymmetrisch ausgebildeten Fahrwerke können Transportelemente beliebig ausgeschleust und eingefügt werden, ohne die minimal erreichbare Transportteilung negativ zu beeinflussen.

Zu diesem Zweck kann insbesondere auch die Anordnung der Magnete der Sekundärteile der Transportelemente inversionssymmetrisch sein, d. h. eine C₂ Symmetrie gegenüber Drehung der Sekundärteile um eine Achse senkrecht zur Trägerplatte aufweisen. Dies bewirkt in Kombination mit den oben beschriebenen Weiterbildungen, dass auch die Sekundärteile eine mit dem Ausschleusen und Einfügen von Transportelementen kompatible Ausbildung besitzen.

Die Transportelemente können zudem mittels sogenannter gotischer Rollen an einer oder mehreren Führungsschienen der Transportbahn gelagert sein. Gotische Rollen verfügen über eine gotische Laufrille, deren Profil von der Kreisbogenform abweicht. Aus diesem Grund haben gotische Rollen stets zwei Kontaktpunkte mit einer Führungsschiene mit kreisförmigem Querschnitt. Eine Lagerung mit gotischen Rollen ist daher besonders reibungs- und verschleißarm.

Alternativ können auch Rollen mit einer konvexen, konkaven oder zylindrischen Lauffläche verwendet werden. Die entsprechenden Führungsschienen können dabei ein entsprechend konkaves, konvexes oder ebenes Kontaktprofil aufweisen.

Die oben beschriebenen Weiterbildungen gestatten es, die Transportelemente näher zusammenzufahren, als es die Längsausdehnung der Sekundärteile zulassen würde. Dadurch können sehr kleine Transportteilungen realisiert werden, wie sie z. B. im IR-Ofen für Streckblasmaschinen benötigt werden. Die beschriebenen Weiterbildungen der Fahrwerke gestatten zudem einen vergrößerten Achsabstand der Lagerelemente und somit eine stabilere und verschleißärmere Lagerung.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 zeigt ein exemplarisches Transportsystem mit beidseitigem Linearmotor und Transportelement, wie es im Stand der Technik bekannt ist.
Figur 2 zeigt einen Querschnitt des in Figur 1 gezeigten Transportsystems.
Figur 3 zeigt eine perspektivische Ansicht der Anordnung der Magnete eines Sekundärteils des Stands der Technik.
Figur 4 zeigt schematisch den von den Magneten des Sekundärteils im Stand der Technik belegten Bereich senkrecht zur Transportrichtung.
Figur 5 zeigt eine exemplarische Ausführung des Fahrwerks eines linearen Transportsystems gemäß der vorliegenden Erfindung.
Figur 6 zeigt eine Detailzeichnung des Fahrwerks eines Transportelements der Figur 5.
Figur 7 zeigt eine erste exemplarische Weiterbildung der Sequenz von Magneten und des Sekundärteils gemäß der vorliegenden Erfindung.
Figur 8 zeigt eine alternative Weiterbildung der Sequenz von Magneten und des Sekundärteils gemäß der vorliegenden Erfindung.
Figur 9 zeigt eine weitere alternative Weiterbildung der Sequenz von Magneten und des Sekundärteils gemäß der vorliegenden Erfindung.
Figur 10 zeigt zwei exemplarische Weiterbildungen der Anordnung der Magnetsequenzen an den Fahrwerken der Transportelemente gemäß der vorliegenden Erfindung.
Figur 11 zeigt zwei alternative Weiterbildungen der Anordnung der Magnetsequenzen an den Fahrwerken der Transportelemente gemäß der vorliegenden Erfindung.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

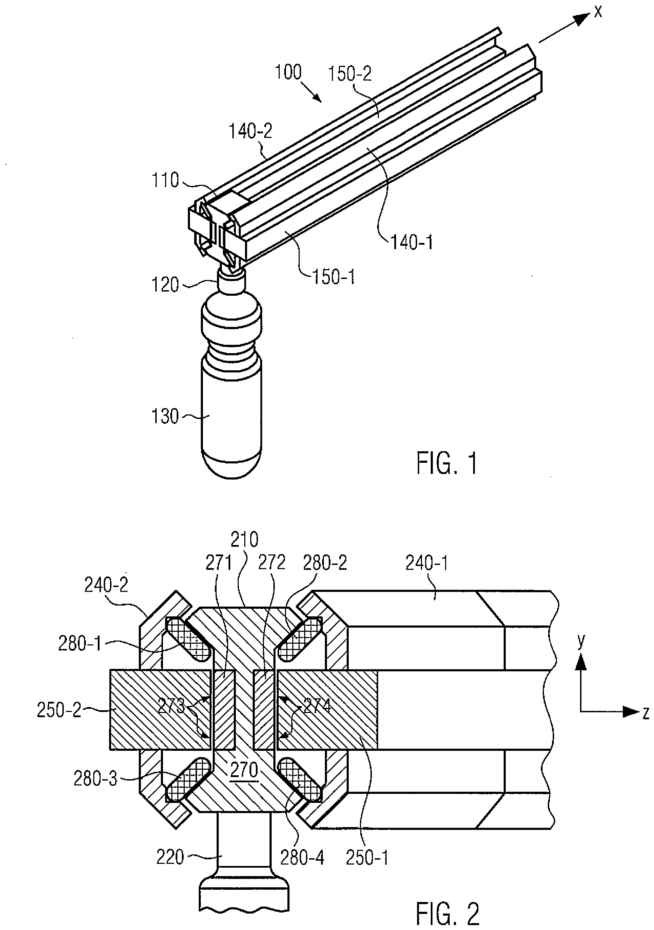

In der Figur 1 ist eine dreidimensionale Ansicht eines linearen Transportsystems gezeigt, wie es im Stand der Technik bekannt ist und beispielsweise in der DE 10 2013 218 389 A1 beschrieben wurde. Das gezeigte lineare Transportsystem 100 umfasst eine Transportbahn, welche eine erste Führungsschiene 140-1, eine zweite Führungsschiene 140-2, einen ersten Langstator 150-1 und einen zweiten Langstator 150-2 aufweist. Das gezeigte Transportsystem ist somit als Doppelschienensystem mit beidseitigem Linearmotor ausgebildet.

Zwischen den beiden Führungsschienen werden die Transportelemente 110 gezielt über magnetische Wechselwirkung mit den Langstatoren 150-1 und 150-2 bewegt. Die Transportrichtung ist hier und im Folgenden mit **X** bezeichnet. Das gezeigte Transportelement 110 transportiert mittels eines Greifelements 120, beispielsweise einer Neckhandlingklammer, einen oder mehrere Behälter 130, hier exemplarisch als Kunststoffflasche gezeigt. In der dargestellten Ausführung ist die Kunststoffflasche hängend unterhalb des Transportelements 110 angeordnet. Es versteht sich jedoch, dass der transportierte Behälter auch stehend oder liegend auf dem Transportelement 110, wenn nötig mittels einer entsprechenden Haltevorrichtung, transportiert werden kann.

Figur 2 zeigt einen Querschnitt durch ein exemplarisch dargestelltes Transportelement, wie es im Stand der Technik bekannt ist. Das gezeigte Transportelement 210 wird zwischen zwei parallel zueinander angeordneten Führungsschienen 240-1 und 240-2 über magnetische Wechselwirkung mit den an den Führungsschienen befestigten und parallel zu diesen verlaufenden Langstatoren 250-1 und 250-2 gesteuert bewegt, wobei Führungsrollen 280-1 bis 280-4 als Lagerelemente des Transportelements in Kontakt mit dafür eigens an den Führungsschienen 240-1 und 240-2 vorgesehenen Führungsrinnen stehen. Alternativ können auch Spurkränze oder Führungskanäle verwendet werden.

Neben dem Greifelement 220 für den zu transportierenden Behälter weist das hier dargestellte Transportelement 210 ein Sekundärteil 270 auf, welches durch Wechselwirkung mit den Linearmotorsträngen 250-1 und 250-2 dem Vortrieb des Transportelements entlang der Transportbahn dient. Hierzu weist das Sekundärteil eine oder mehrere Sequenzen von Permanentmagneten und/oder nicht schaltenden Elektromagneten auf, von denen hier exemplarisch lediglich zwei magnetische Pole 271 und 272 dargestellt sind. In der hier dargestellten exemplarischen Ausführung umfasst das Sekundärteil auf beiden Seiten getrennt voneinander angeordnete Sequenzen von Permanentmagneten, welche auf einer Trägerplatte angeordnet sind. Eine Vielzahl alternativer Weiterbildungen ist vorstellbar und im Stand der Technik bekannt.

Zwischen den Linearmotorsträngen 250-1 bzw. 250-2 und den Sequenzen von Magneten 272 bzw. 271 sind Luftspalte 274 bzw. 273 vorgesehen, über welche die magnetische Wechselwirkung ohne Reibung stattfindet. Die Luftspalte erstrecken sich dabei wie gezeigt flächig sowohl in die Transportrichtung **X** als auch senkrecht zur Transportrichtung, d. h. in die gezeigte Richtung **Y.** Die hier dargestellte Weiterbildung stellt den Fall einer vertikalen Anordnung des Sekundärteils 270 dar. Es versteht sich jedoch, dass das Sekundärteil auch horizontal angeordnet werden kann, indem beispielsweise ein Langstator oberhalb des Transportelements 210 zwischen den Führungsschienen 240-1 und 240-2 angeordnet wird. Die gezeigte Richtung **Z** stellt hier und im Folgenden einerseits die Normale zur Trägerplatte des Sekundärteils 270 und andererseits eine Drehachse für die weiter unten erwähnte C₂ Symmetrie dar.

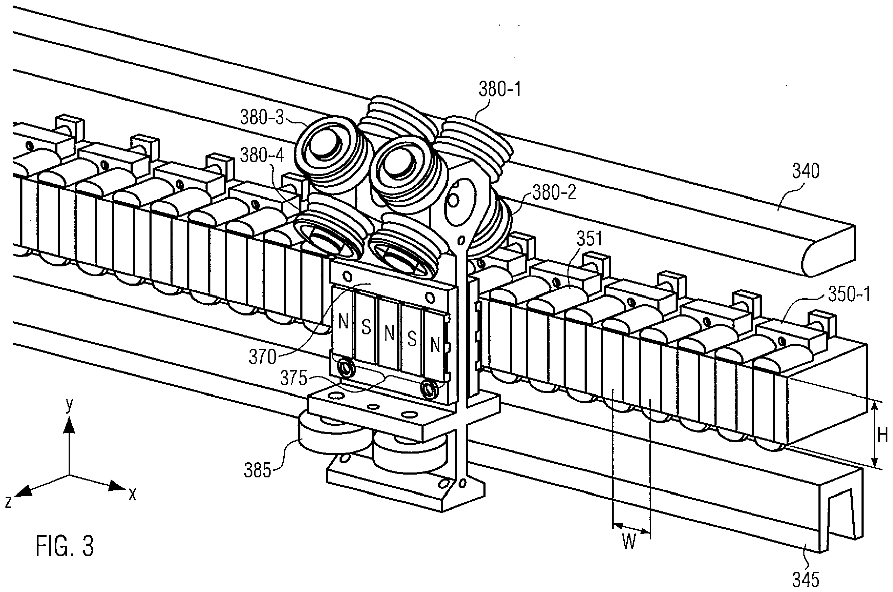

Figur 3 zeigt eine perspektivische Ansicht der Anordnung der Magnete eines Sekundärteils des Stands der Technik. Auch hier ist ein Doppelschienensystem mit beidseitigem Linearmotor gezeigt, wobei der besseren Übersichtlichkeit halber jedoch lediglich eine Führungsschiene 340 und ein Langstator 350-1 gezeigt sind. Wie in der Figur 3 schematisch gezeigt, weist der Langstator 350-1 eine Serie von Spulen 351 mit einer Höhe **H** senkrecht zur Transportrichtung, d. h. in **Y**-Richtung, auf, welche in einem Abstand **W** voneinander entlang des Langstators angeordnet sind. Die magnetischen Wechselfelder der Spulen 351 wechselwirken dabei mit den mit abwechselnder Polung N bzw. S in einer Reihe, d. h. Sequenz 375 angeordneten Permanent- und/oder nicht schaltenden Elektromagneten des Sekundärteils 370, welches auch hier in der vertikalen Konfiguration gezeigt ist. Das Sekundärteil 370 ist dabei Teil eines Transportelements, welches über Rollen 380-1 bis 380-4 an Führungsschienen 340 bewegbar gelagert ist und außerdem über Stützrollen 385 an Laufschienen 345 abgestützt wird.

Anhand der Figur 3 ist erkennbar, dass einerseits die Ausdehnung der Magnete der Sequenz 375 in **Y**-Richtung der Höhe **H** der Spulen 351 entspricht, und dass andererseits die Längsausdehnung der Sequenz 375 in Transportrichtung **X** eine absolute Untergrenze für die minimal erreichbare Transportteilung darstellt.

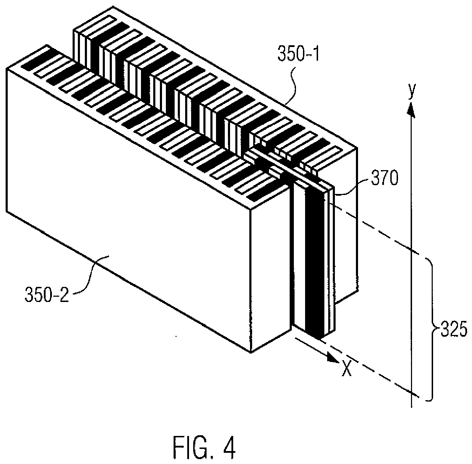

Figur 4 zeigt schematisch den von den Magneten des Sekundärteils im Stand der Technik belegten Bereich senkrecht zur Transportrichtung. Auch hier ist wieder ein beidseitiger Linearmotor mit parallelen Langstatoren 350-1 und 350-2 gezeigt, zwischen denen das Sekundärteil 370 läuft. Die Ausdehnung der Magnete des Sekundärteils 370 in **Y**-Richtung, d. h. senkrecht zur Transportrichtung **X,** ist dabei derart, dass sie denselben Bereich 325 belegen, den auch die angedeuteten Pole der Langstatoren 350-1 und 350-2 belegen.

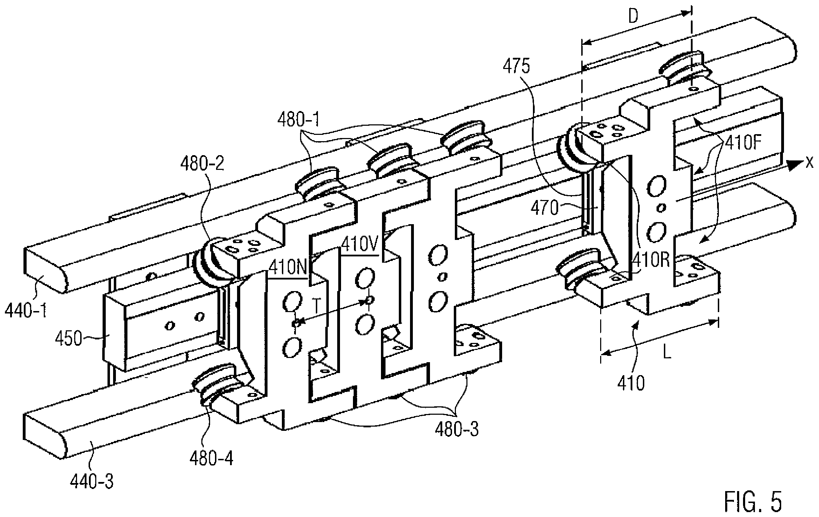

Figur 5 zeigt eine exemplarische Ausführung der Ausbildung von Transportelementen eines linearen Transportsystems gemäß der vorliegenden Erfindung. In der gezeigten nicht limitierenden Weiterbildung sind die Transportelemente 410 über Führungsrollen 480-1 bis 480-4 an zwei parallel geführten Führungsschienen 440-1 und 440-3 gelagert, wobei zwischen den Führungsschienen ein Langstator 450 angeordnet ist. Die beispielhafte Darstellung zeigt einen einseitigen Linearmotor, bei dem die Transportelemente 410 von dem vertikal ausgerichteten Langstator 450 durch magnetische Wechselwirkung mit den Magneten der Sequenz 475 des Sekundärteils 470 der Transportelemente 410 seitlich an den Führungsschienen gehalten werden. Es versteht sich jedoch, dass die vorliegende Erfindung nicht auf diese Anordnung beschränkt ist. Selbstverständlich können die Transportelemente 410 auch beidseitig geführt und auch beidseitig angetrieben werden. Ebenso kann die gezeigte Konfiguration in eine horizontale Ebene gedreht werden, sodass die Transportelemente 410 wie Wagons auf dem Doppelschienensystem 440-1 und 440-3 bewegt werden.

Entscheidend ist für die Ausbildung der Fahrwerke lediglich, dass die Frontseiten 410F und Rückseiten 410R der Transportelemente 410 derart geformt sind, dass die Transportelemente soweit ineinander gefahren werden können, dass sich eine minimal erreichbare Transportteilung **T** ergibt, die geringer als die Längsausdehnung **L** der Transportelemente ist. Front- und Rückseite 410F bzw. 410R eines Transportelements 410 sind hierbei anhand der bevorzugten Transportrichtung **X,** die sich aus der Anordnung des Transportsystems in der Behälterbehandlungsanlage ergibt, definiert. Die sich auf Front- und Rückseite beziehenden Beschreibungen in dieser Offenbarung lassen sich jedoch auch ohne Einschränkung auf um 180 Grad gedrehte Transportelemente übertragen.

Das Profil bzw. die Kontur des der Einfachheit halber auf das Fahrwerk reduzierten Transportelements 410 in einer Ebene, welche die Transportrichtung **X** enthält und parallel zu der von den Führungsschienen 440-1 und 440-3 aufgespannten Ebene ist, ist nun nicht mehr im Wesentlichen rechteckig, sondern vielmehr durch Vorsprünge und Ausnehmungen gekennzeichnet, welche wie in Figur 5 gezeigt ineinander gefahren werden können. Dabei kann ein nachlaufendes Transportelement 410N soweit an ein vorauslaufendes Transportelement 410V herangefahren werden, dass die minimal erreichbare Transportteilung **T** geringer als die maximale Längsausdehnung **L** der Transportelemente, ja selbst geringer als der Abstand **D** der Führungsrollen 480-1 und 480-2 wird. In der hier gezeigten Weiterbildung ergibt sich dieser Abstand **D** als maximaler Abstand zweier beliebiger Lagerelemente in Transportrichtung **X.** Die mögliche Überschneidung der Front- und Rückseiten der Fahrwerke der Transportelemente ermöglicht eine reduzierte Transportteilung **T** bei gleichzeitiger Vergrößerung des Abstandes **D** der Lagerelemente. Dadurch können sowohl der Durchsatz an Behältern als auch die Stabilität der Führung erhöht und gleichzeitig der Verschleiß der Lagerelemente reduziert werden. Beispielsweise kann für Transportelemente einer Längsausdehnung von 90 bis 110 mm eine minimale Transportteilung von 40 bis 60 mm erreicht werden. Die Transportelemente können dabei derart ausgebildet sein, dass die minimal erreichbare Transportteilung **T** kleiner als 85% der Längsausdehnung, bevorzugt kleiner als 55%, besonders bevorzugt kleiner als 40% der Längsausdehnung **L** der Transportelemente ist.

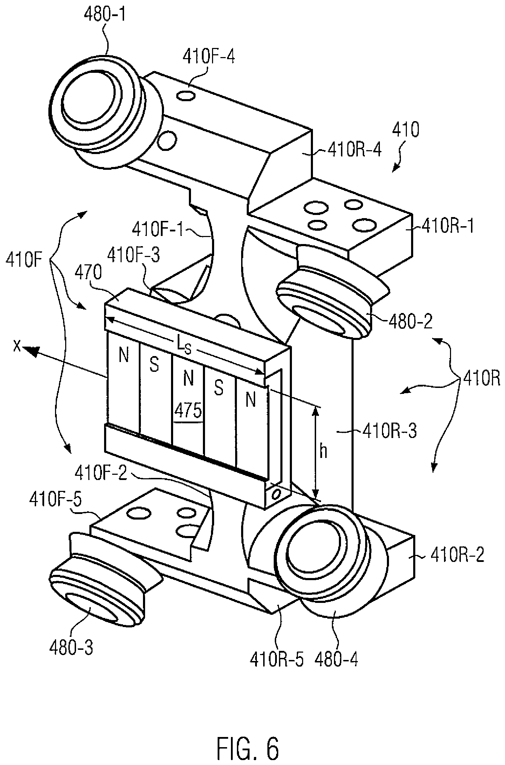

Die erwähnte mögliche Verzahnung von Frontseite 410F und Rückseite 410R eines Transportelements lässt sich besser anhand der Detailzeichnung eines Transportelements gemäß der vorliegenden Erfindung in Figur 6 nachvollziehen. Die Frontseite 410F weist neben den Ausnehmungen 410F-1 und 410F-2 mehrere Vorsprünge 410F-3 bis 410F-5 auf. Dementsprechend weist die Rückseite 410R entsprechend gestaltete Vorsprünge 410R-1 und 410R-2 und Ausnehmungen 410R-3 bis 410R-5 auf. Die Ausnehmungen und Vorsprünge sind dabei derart geformt, dass die Vorsprünge 410F-3 bis 410F-5 der Frontseite 410F in die Ausnehmung 410R-3 bis 410R-5 der Rückseite 410R und umgekehrt die Vorsprünge 410R-1 und 410R-2 der Rückseite 410R in die Ausnehmungen 410F-1 und 410F-2 der Frontseite 410F gefahren werden können. Dabei sind an den Vorsprüngen 410F-4 und 410F-5 sowie 410R-1 und 410R-2 die Führungsrollen 480-1 und 480-3 bzw. 480-2 und 480-4 angeordnet, um einen möglichst großen Abstand **D** der Lagerelemente zu erzielen. Um sich beim Ineinander Fahren der Transportelemente 410 nicht zu behindern, können die Führungsrollen 480-1 und 480-3 der Frontseite 410F zudem um 90 Grad gegenüber den Führungsrollen 480-2 und 480-4 der Rückseite 410R verkippt sein, wie es in der Figur 6 gezeigt ist. Dies gestattet zudem auf einfache Weise, dass je zwei Führungsrollen 480-1 und 480-2 bzw. 480-3 und 480-4 an derselben Führungsschiene geführt werden können, was die Gesamtkonstruktion vereinfacht.

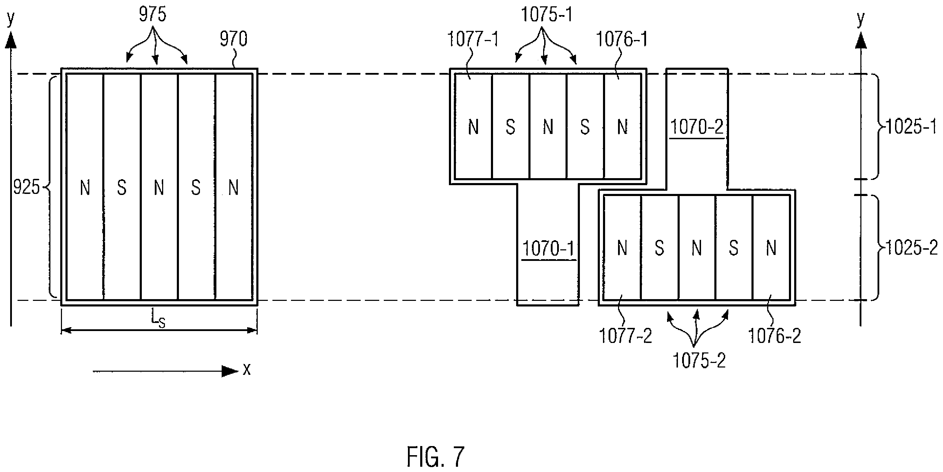

Die Sekundärteile 470 der in den Figuren 5 und 6 gezeigten Transportelemente 410 sind zur Demonstration mit einer Sequenz 475 von Magneten, wie sie im Stand der Technik bekannt ist, bestückt. Ohne Einschränkung umfasst die gezeigte Sequenz 475 fünf Magnete, genauer fünf magnetische Pole, alternierender Polung in einer Reihe mit Längsausdehnung **Lₛ** und Höhe **h,** wobei die Höhe h der Höhe der Spulen des Langstators 450 entspricht. Um eine weitere Reduzierung der minimal erreichbaren Transportteilung **T,** sogar unter die Längsausdehnung **Lₛ**, zu ermöglichen, werden gemäß der vorliegenden Erfindung sowohl die Ausbildung der Magnete der Sequenz und deren Anordnung als auch die Ausbildung des Sekundärteils derart geändert, dass aufeinanderfolgende Sekundärteile ineinander gefahren werden können. Exemplarische Weiterbildungen dieser Art sind in den Figuren 7 bis 9 gezeigt.

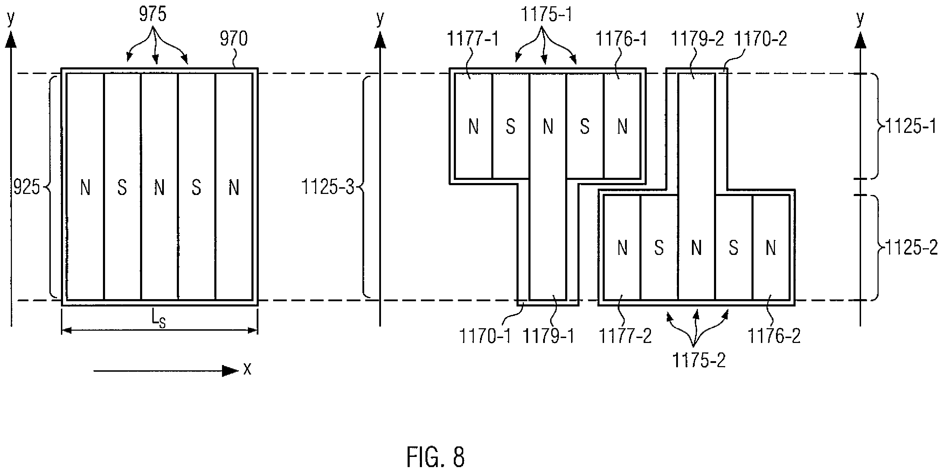

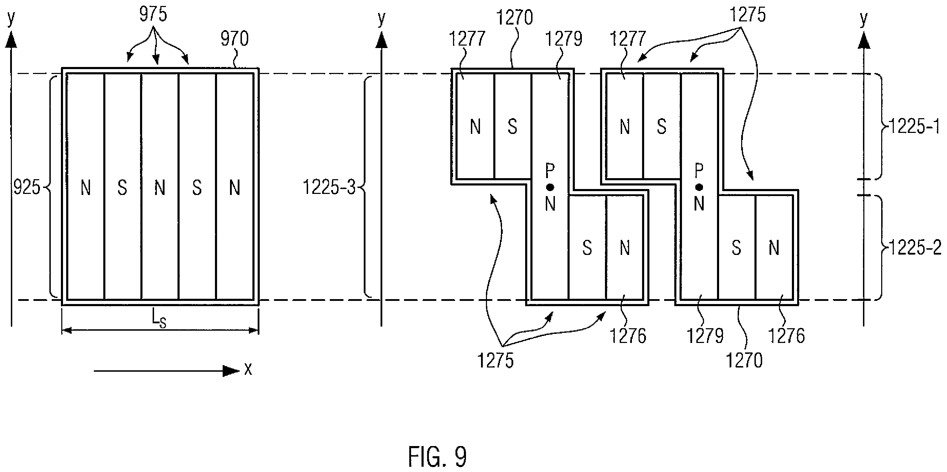

Figur 7 zeigt eine erste exemplarische Weiterbildung der Sequenz von Magneten und des Sekundärteils gemäß der vorliegenden Erfindung. Zum Vergleich ist in dieser Figur wie auch in den Figuren 8 und 9 auf der linken Seite ein Sekundärteil 970 mit einer Sequenz 975 von Magneten des Stands der Technik dargestellt. Die Magnete der Sequenz 975 erstrecken sich dabei über den gesamten von den Spulen des Langstators belegten Bereich 925 in **Y**-Richtung, d. h. senkrecht zur Transportrichtung **X.**

Auf der rechten Seite der Figur 7 ist eine erste exemplarische Weiterbildung der Sequenz von Magneten und des Sekundärteils gemäß der vorliegenden Erfindung gezeigt. Hier zerfällt die Vielzahl von Transportelementen in zwei Gruppen, welche jeweils ein Sekundärteil 1070-1 der ersten Art oder ein Sekundärteil 1070-2 der zweiten Art besitzen. Im Transportstrom sind die Transportelemente aus den beiden Gruppen dann abwechselnd angeordnet, um ein Ineinander Fahren der Sekundärteile 1070-1 und 1070-2 aufeinanderfolgender Transportelemente wie in der Figur gezeigt zu ermöglichen. Gegenüber den Magneten der Sequenz 975 des Stands der Technik sind die Magnete der Sequenzen 1075-1 und 1075-2 gemäß der vorliegenden Weiterbildung in ihrer Höhe auf weniger als die Hälfte reduziert. Alternativ kann die Höhe des einen Teils der Magnete um weniger als die Hälfte, die Höhe des anderen Teils der Magnete um mehr als die Hälfte reduziert sein. Dabei sind die Sequenzen 1075-1 und 1075-2 auf dem jeweiligen Querteil der im Wesentlichen T-förmigen Sekundärteile 1070-1 und 1070-2 derart angeordnet, dass die Magnete 1076-1 und 1077-2 benachbarter Sequenzenden überschneidungsfreie Bereiche 1025-1 bzw. 1025-2 senkrecht zur Transportrichtung belegen. Es versteht sich, dass auch andere Formen, insbesondere rechteckige Formen, der Sekundärteile möglich sind und je nach Ausbildung des Linearmotorantriebs eingesetzt werden können. Wie in der Figur gezeigt sind diese beiden Bereiche 1025-1 und 1025-2 um eine bestimmte Distanz voneinander getrennt, um unerwünscht starke magnetische Wechselwirkungen zwischen den Magneten 1076-1 und 1077-2 zu vermeiden.

Aufgrund der Überschneidungsfreiheit der belegten Bereiche 1025-1 und 1025-2 können die Sekundärteile 1070-1 und 1070-2 so nah aneinander herangefahren werden, dass die Magnete 1076-1 und 1077-2 der benachbarten Sequenzenden direkt untereinander, d. h. in einer Flucht, angeordnet sind. Somit wechselwirken beide Magnete 1076-1 und 1077-2 in der gezeigten Stellung mit derselben Wicklung des (nicht dargestellten) Langstators. Die zu den Sekundärteilen 1070-1 und 1070-2 gehörenden Transportelemente können somit synchron mit minimaler Teilung, quasi als Zug von Transportelementen, geführt werden. In der gezeigten Weiterbildung belegen alle Magnete einer Sequenz 1075-1 bzw. 1075-2 denselben Bereich 1025-1 bzw. 1025-2, sodass bei geeigneter Ausbildung der Sekundärteile 1070-1 und 1070-2 und längeren Sequenzen auch größere Überlappungen vorstellbar sind. Wegen der alternierenden Polung überlappen sich dabei vorteilhafterweise stets eine ungerade Anzahl von Magneten, sodass stets gleichartige Pole übereinander stehen. In der dargestellten Konfiguration kann der letzte Magnet 1077-1 der Sequenz 1075-1 mit dem ersten Magnet eines nachlaufenden Transportelements (nicht dargestellt) überlappen. Ebenso kann der erste Magnet 1076-2 der Sequenz 1075-2 mit dem letzten Magnet eines vorauslaufenden Transportelements (nicht dargestellt) überlappen. Auf diese Weise können ganze Ketten von Transportelementen gebildet werden.

Alternativ kann sich auch eine gerade Anzahl von Magneten überlappen. In diesem Fall ist jedoch die Polung der Magnete aufeinander folgender Transportelemente invertiert. Beispielsweise folgt auf eine N-S-N-S-N Kombination einer Fünfersequenz 1075-1 eine S-N-S-N-S Kombination einer weiteren Fünfersequenz 1075-2.

In Figur 8 ist eine alternative Weiterbildung der Sequenz von Magneten und des Sekundärteils gemäß der vorliegenden Erfindung dargestellt. Auch hier besitzen die Sekundärteile 1170-1 und 1170-2 im Wesentlichen eine T-Form, wobei diese zwischen aufeinanderfolgenden Sekundärteilen um 180 Grad um eine **Z**-Achse gedreht sind. Auch hier belegen die Endmagnete 1176-1 und 1177-1 der Sequenz 1175-1 und die Endmagnete 1176-2 und 1177-2 der Sequenz 1175-2 senkrecht zur Transportrichtung überschneidungsfreie Bereiche 1125-1 bzw. 1125-2. Anders als in der Weiterbildung der Figur 7 jedoch ist der mittlere Magnet 1179-1 bzw. 1179-2 über die volle Höhe 1125-3 des jeweiligen Sekundärteils ausgebildet und belegt somit sowohl den Bereich 1125-1 als auch den Bereich 1125-2, sowie das Segment zwischen den beiden Bereichen. Ein derart verlängerter mittlerer Magnet wirkt sich nicht auf die minimale Transportteilung aus, da auch hier die Magnete 1176-1 und 1177-2 benachbarter Sequenzenden auf einer Linie angeordnet werden können, erhöht aber die Vortriebskraft auf das Transportelement. Bei längeren Sequenzen können entsprechend mehrere mittlere Magnete mit voller Höhe 1125-3 ausgebildet sein.

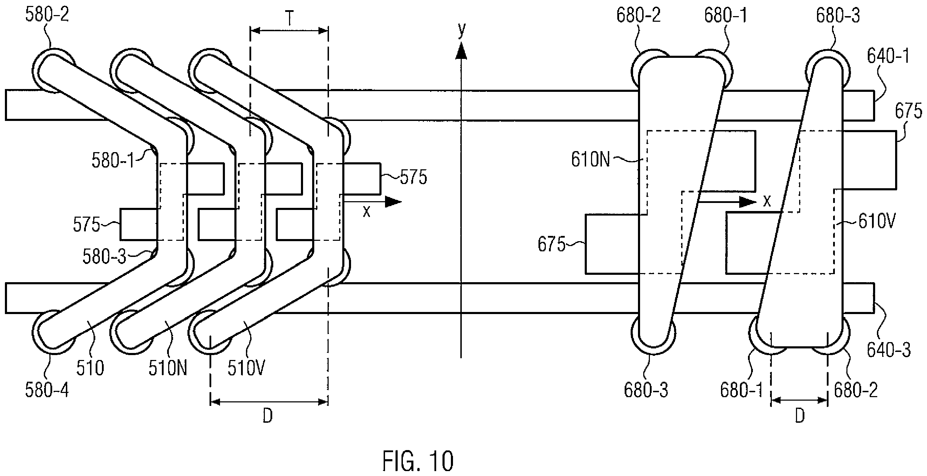

Figur 9 zeigt eine weitere alternative Weiterbildung der Sequenz von Magneten und des Sekundärteils gemäß der vorliegenden Erfindung. Hier sind die Sekundärteile 1270 aller Transportelemente gleich ausgebildet und besitzen eine Treppen- oder Z-Form. Dies bedeutet, dass sich der mittlere Magnet 1279, oder bei längeren Sequenzen mehrere mittlere Magnete, über die volle Höhe 1225-3 erstrecken, während die übrigen Magnete der Sequenzen 1275 lediglich eine reduzierte Höhe haben. Aufgrund der Treppenform belegen somit die in dieser nicht limitierenden Darstellung vorderen Magnete 1276 den zweiten Bereich 1225-2 und die hinteren Magnete 1277 den ersten Bereich 1225-1, wobei die beiden Bereiche wie bisher überschneidungsfrei sind. Dementsprechend können die Endmagneten 1276 und 1277 benachbarter Sequenzen 1275 übereinander gefahren werden. Die gezeigte Ausbildung der Magnete ist aufgrund ihrer Inversionssymmetrie um den Punkt **P** besonders gut geeignet für keil- oder winkelförmige Fahrwerke mit einem horizontal ausgerichteten Sekundärteil, wie beispielsweise in Figur 10 gezeigt. Zudem gestattet diese gleichartige Ausbildung der Sekundärteile aller Transportelemente, dass einzelne Transportelemente beliebig in den Strom von Transportelementen eingeschleust oder daraus ausgeschleust werden können, ohne die minimal erreichbare Transportteilung negativ zu beeinflussen.

Figur 10 zeigt schematisch zwei exemplarische Weiterbildungen der Anordnung der Sequenzen von Magneten an den Fahrwerken der Transportelemente gemäß der vorliegenden Erfindung. Der Einfachheit halber beschränkt sich die Darstellung auf die Fahrwerke der Transportelemente und die daran angeordneten Sequenzen. Es versteht sich, dass weitere benötigte Elemente, wie Trägerplatten, Greifelemente und dergleichen, an geeigneter Stelle an den Transportelementen angeordnet werden können. Zudem ist zur gleichzeitigen Darstellbarkeit von Fahrwerk und Sequenz in einer Draufsicht eine horizontale Anordnung des Linearmotors gewählt worden, bei der der Langstator (nicht dargestellt) unterhalb der Transportelemente und zwischen den beiden Führungsschienen des Doppelschienensystems angeordnet ist. Es versteht sich, dass die dargestellten Weiterbildungen im Rahmen der vorliegenden Erfindung an den oben beschriebenen vertikalen Fall angepasst werden können.

Auf der linken Seite der Figur 10 sind Transportelemente 510 gezeigt, deren Frontseite bzw. Rückseite eine im Wesentlichen konvexe bzw. konkave Form aufweist. Die gezeigten Transportelemente 510 sind mittels beidseitig angreifender Führungsrollen 580-1 und 580-2 an einer ersten Führungsschiene 640-1 und mittels beidseitig angreifender Führungsrollen 580-3 und 580-4 an einer zweiten Führungsschiene 640-3 gelagert. Die Sequenzen 575 von Magneten sind in der dargestellten Weiterbildung treppenförmig ausgebildet und an dem mittleren Teil des Fahrwerks befestigt. Aufgrund der U-förmigen Gestaltung der Fahrwerke und der Treppenform der Magnetsequenzen kann ein nachlaufendes Transportelement 510N so weit in ein vorauslaufendes Transportelement 510V gefahren werden, dass die minimal erreichbare Transportteilung **T** erheblich geringer als der Abstand **D** der Lagerelemente in Transportrichtung **X** ist. Beispielsweise lässt sich bei einem Abstand **D** von 60 mm eine minimale Teilung **T** von 40 mm erreichen.

Eine etwas andere Weiterbildung der Transportelemente ist auf der rechten Seite der Figur 10 dargestellt. Hier sind die Fahrwerke der Transportelemente winkelförmig ausgebildet, wobei aufeinanderfolgende Transportelemente 610N und 610V stets um 180 Grad gedreht an den Führungsschienen 640-1 und 640-3 angeordnet sind. Somit ist das nachlaufende Transportelement 610N exemplarisch mit zwei Rollen 680-1 und 680-2 an der ersten Führungsschiene 640-1 und mit lediglich einer Rolle 680-3 an der zweiten Führungsschiene 640-3 gelagert, während das vorauslaufende Transportelement 610V mit zwei Rollen 680-1 und 680-2 an der zweiten Führungsschiene 640-3 und mit lediglich einer Rolle 680-3 an der ersten Führungsschiene 640-1 gelagert ist. Der Abstand **D** der Lagerelemente ist hierbei als der maximale Abstand zweier Rollen definiert. Auch hier sind treppenförmige Magnetsequenzen 675 an den Transportelementen angeordnet. Dies hat den Vorteil, dass aufgrund der C₂ Symmetrie der Sequenzen 675 lediglich eine Sorte von Transportelementen hergestellt werden muss, die dann abwechselnd um 180 Grad gedreht an der Transportbahn angeordnet werden. Aufgrund des keilförmigen Aufbaus der Transportelemente über den winkelförmig angeordneten Rollen 680-1 bis 680-3 kann eine Transportteilung **T** erzielt werden, die geringer als die Längsausdehnung der Transportelemente ist, welche in diesem Fall durch die Längsausdehnung der Sekundärteile gegeben ist. Dabei werden die Transportelemente gemäß dieser Weiterbildung immer paarweise ineinander gefahren.

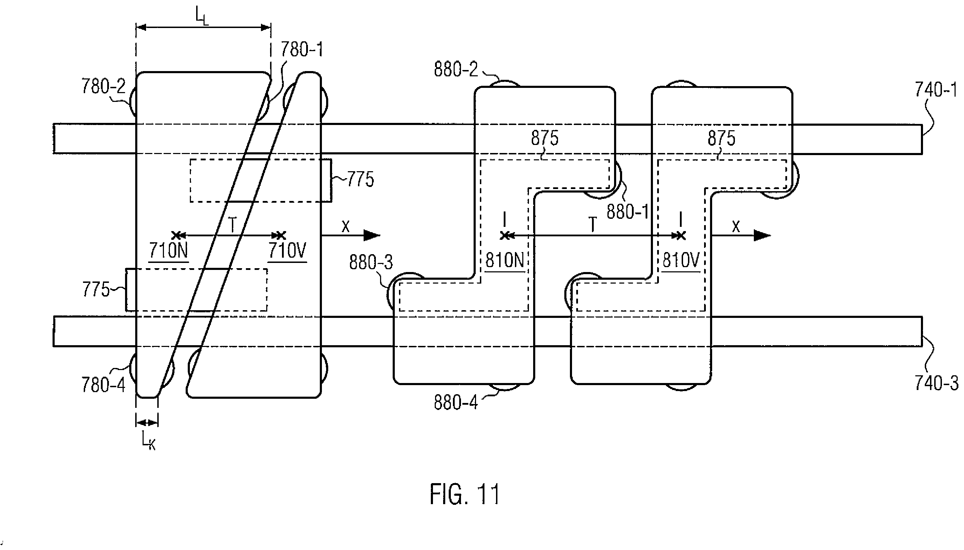

Eine ähnliche Weiterbildung mit einem keilförmigen Fahrwerk ist im linken Teil der Figur 11 schematisch dargestellt. Auch hier werden die Transportelemente mit zwei Führungsrollen 780-1 und 780-2 an der ersten Führungsschiene 740-1 gelagert, während sie mit nur einer Führungsrolle 780-3 an der zweiten Führungsschiene 740-3 gelagert sind. Die Transportelemente besitzen somit eine lange Längsseite mit Ausdehnung **L_{L}** und eine kurze Längsseite mit Ausdehnung **L_{K}**. Der Abstand **D** der Lagerelemente ergibt sich als Abstand der Rollen 780-1 und 780-2, da dies der größte Abstand in Längsrichtung ist. In dieser Weiterbildung werden Sequenzen 775 von Magneten verwendet, bei denen alle Magnete der Sequenz eines bestimmten Transportelements denselben Bereich belegen. Beispielsweise sind die Magnete wie hier gezeigt als lineare Sequenz angeordnet, die versetzt zum Mittelpunkt zwischen den Führungsschienen 740-1 und 740-3 an den Transportelementen angeordnet ist. Durch Drehen eines Transportelements um 180 Grad wechselt die Sequenz von dem ersten in den zweiten Bereich, sodass sich die Sequenzen von um 180 Grad gedrehten Transportelementen wie hier gezeigt nicht behindern.

Aus diesem Grund können die Transportelemente paarweise soweit ineinander gefahren werden, dass die Transportteilung **T** zwischen sich entsprechenden Punkten des nachlaufenden Transportelements 710N und des vorauslaufenden Transportelements 710V erkennbar geringer als die Ausdehnung **L_{L}** der langen Seite ist. Darüber hinaus ist die Teilung zwischen zwei aufeinanderfolgenden Paaren von um 180 Grad gedrehten Transportelementen ebenfalls geringer als deren Längsausdehnung, sodass sich ein Transportstrom mit hohem Durchsatz ergibt.

Auf der rechten Seite der Figur 11 ist schließlich eine Weiterbildung dargestellt, bei der die Fahrwerke der Transportelemente ebenso wie ihre Magnetsequenzen 875 eine Treppen- bzw. Z-Form aufweisen. Das Fahrwerk ist zumindest bezüglich der Anordnung der Führungsrollen 880-1 bis 880-4 inversionssymmetrisch bzgl. eines Inversionspunktes I ausgebildet, sodass das Fahrwerk eine C₂ Symmetrie aufweist. Ebenso weist auch jede Sequenz 875 eine Inversionssymmetrie bzgl. des Inversionspunktes I auf. Der maximale Abstand **D** der Lagerelemente ergibt sich in diesem Fall für die an unterschiedlichen Führungsschienen 740-1 und 740-3 angeordneten Führungsrollen 880-1 und 880-3, welcher auch hier größer als die minimal erreichbare Teilung **T** zwischen nachlaufendem Transportelement 810N und vorauslaufendem Transportelement 810V ist. Die spezielle Anordnung der Führungsrollen verleiht diesem Fahrwerk eine besonders hohe Stabilität gegen Drehmomente. Darüber hinaus können einzelne Transportelemente beliebig in den Strom von Transportelementen eingefügt und aus diesem heraus geschleust werden.

Eine Vielzahl weiterer Ausführungen ist im Rahmen der vorliegenden Erfindung denkbar, deren minimal erreichbare Transportteilung geringer als die Längsausdehnung der Transportelemente und insbesondere geringer als die Längsausdehnung der Sekundärteile ist. Dabei können die hier explizit dargestellten und beschriebenen Weiterbildungen gemäß den Anforderungen der Prozessstrecke angepasst werden, ohne das beschriebene Grundprinzip zu verletzen.

## Patentansprüche

1. Transportsystem zum Transport von Behältern (130) in einer Behälterbehandlungsanlage, umfassend:
eine Transportbahn mit wenigstens einem Langstator (450) eines Linearmotors, und
eine Vielzahl von Transportelementen (410; 510; 610N, 610V; 710N, 710V; 810N; 810V) zum Transportieren eines oder mehrerer Behälter (130),
wobei die Transportelemente bewegbar an der Transportbahn angeordnet sind und jeweils wenigstens ein Sekundärteil (470; 1070-1, 1070-2; 1170-1, 1170-2; 1270) zur magnetischen Wechselwirkung mit dem wenigstens einen Langstator (450) aufweisen, und
wobei wenigstens eine Sequenz (575; 675; 775; 875; 1075-1, 1075-2; 1175-1, 1175-2; 1275) von Permanentmagneten und/oder Elektromagneten abwechselnder Polung an dem Sekundärteil derart angebracht ist, dass das jeweilige Transportelement durch magnetische Wechselwirkung der Magneten der Sequenz mit dem Langstator (450) individuell entlang der Transportbahn bewegbar ist, **dadurch gekennzeichnet, dass** eine Ausdehnung zumindest des ersten (1076-1, 1076-2; 1176-1, 1176-2; 1276) und des letzten Magneten (1077-1, 1077-2; 1177-1, 1177-2; 1277) senkrecht zu einer Transportrichtung der Behälter in jeder Sequenz derart reduziert und eine Anordnung zumindest des ersten (1076-1, 1076-2; 1176-1, 1176-2; 1276) und des letzten Magneten (1077-1, 1077-2; 1177-1, 1177-2; 1277) an dem jeweiligen Sekundärteil derart gewählt ist, dass die Ausdehnungen der Magnete (1076-1, 1077-2; 1176-1, 1177-2; 1276, 1277) von benachbarten Sequenzenden zweier aufeinander folgender Transportelemente (510N, 510V; 610N, 610V; 710N, 710V; 810N, 810V) auf einer Achse (Y) senkrecht zur Transportrichtung (X) überschneidungsfreie Bereiche (1025-1, 1025-2; 1125-1, 1125-2; 1225-1, 1225-2) belegen;
wobei die Vielzahl der Transportelemente wenigstens eine erste (710N) und eine zweite (710V) Gruppe von Transportelementen umfasst, wobei die Magnete zumindest der Sequenzenden der Sekundärteile der Transportelemente der ersten Gruppe (710N) einen ersten Bereich (1025-1) auf der Achse (Y) senkrecht zur Transportrichtung (X) belegen, und wobei die Magnete zumindest der Sequenzenden der Sekundärteile der Transportelemente der zweiten Gruppe (710V) einen zweiten, mit dem ersten Bereich überschneidungsfreien Bereich (1125-2) auf der Achse (Y) senkrecht zur Transportrichtung (X) belegen.

2. Transportsystem nach Anspruch 1, wobei alle Magnete der Sekundärteile der Transportelemente der ersten Gruppe den ersten Bereich belegen, und alle Magnete der Sekundärteile der Transportelemente der zweiten Gruppe den zweiten Bereich belegen.

3. Transportsystem nach Anspruch 1, wobei die Anzahl der Magnete in jeder Sequenz (1175-1, 1175-2) ungerade ist, und wobei jeweils zumindest der mittlere Magnet (1179-1, 1179-2) jeder Sequenz der Sekundärteile der Transportelemente der ersten und der zweiten Gruppe mindestens den ersten und den zweiten Bereich belegt.

4. Transportsystem nach einem der vorhergehenden Ansprüche, wobei der Langstator zwei oder mehr den überschneidungsfreien Bereichen entsprechende und parallel geführte Linearmotorstränge aufweist, die unabhängig voneinander ansteuerbar sind.

5. Transportsystem nach einem der vorhergehenden Ansprüche, weiterhin eine mechanische Beschleunigungseinheit, insbesondere eine angetriebene Rolle oder ein angetriebenes Förderband, umfassend, welche derart an der Transportbahn angeordnet ist, dass passierende Transportelemente durch mechanischen Eingriff mit der Beschleunigungseinheit gezielt beschleunigt oder verzögert werden können.

6. Transportsystem nach einem der vorhergehenden Ansprüche, wobei die Front- und Rückseiten (410F, 410R) sowie die Sekundärteile (470; 1070-1, 1070-2; 1170-1, 1170-2; 1270) der Transportelemente derart geformt sind, dass die Transportelemente (410; 510; 610N, 610V; 710N, 710V; 810N; 810V) soweit ineinander gefahren werden können, dass sich eine minimal erreichbare Transportteilung ergibt, die geringer als die Längsausdehnung der Transportelemente ist.

7. Transportsystem nach Anspruch 6, wobei die Sekundärteile der Transportelemente derart geformt und die Magnete der Sekundärteile aufeinanderfolgender Transportelemente derart an dem jeweiligen Sekundärteil angeordnet sind, dass das Sekundärteil eines nachlaufenden Transportelements soweit an das Sekundärteil eines vorauslaufenden Transportelements herangefahren werden kann, dass die Magnete (1076-1, 1077-2; 1176-1, 1176-2; 1277, 1276) der benachbarten Sequenzenden senkrecht zur Transportrichtung auf einer Linie liegen.

8. Transportsystem nach Anspruch 6 oder 7, wobei die Transportelemente (610N, 610V; 710N, 710V) im Wesentlichen keil- oder winkelförmig ausgebildet sind, und wobei aufeinanderfolgende Transportelemente um 180 Grad gedreht an der Transportbahn angeordnet sind.

9. Transportsystem nach Anspruch 8, wobei für jedes Transportelement (710N, 710V) alle Magnete der Sequenz (775) des jeweiligen Sekundärteils derart angeordnet sind, dass sie bei gleicher Ausrichtung an der Transportbahn denselben Bereich senkrecht zur Transportrichtung belegen würden.

10. Transportsystem nach Anspruch 6 oder 7, wobei die Transportelemente (810N, 810V) jeweils Rollen (880-1 - 880-4) aufweisen, mittels derer sie an der Transportbahn gelagert sind, und wobei die Anordnung der Rollen inversionssymmetrisch ist.

## Claims

1. Transport system for transport of containers (130) in a container treatment facility, comprising:
a transport track with at least one long stator (450) of a linear motor, and
a plurality of transport elements (410; 510; 610N, 610V; 710N, 710V; 810N; 810V) for transporting one or multiple containers (130),
wherein the transport elements are arranged movably on the transport track and have each at least one secondary part (470; 1070-1, 1070-2; 1170-1, 1170-2; 1270) for magnetic interaction with the at least one long stator (450), and
wherein at least one sequence (575; 675; 775; 875; 1075-1, 1075-2; 1175-1, 1175-2; 1275) of permanent magnets and/or electromagnets with an alternating polarity is arranged on the secondary part in such a way that the respective transport element can be individually moved along the transport track through magnetic interaction of the magnets of the sequence with the long stator (450),
**characterized in that**
an extension of at least the first (1076-1, 1076-2; 1176-1, 1176-2; 1276) and the last magnet (1077-1, 1077-2; 1177-1, 1177-2; 1277) perpendicular to a transport direction of the containers in each sequence is chosen in such a reduced way, and that an arrangement of at least the first (1076-1, 1076-2; 1176-1, 1176-2; 1276) and the last magnet (1077-1, 1077-2; 1177-1, 1177-2; 1277) on the respective secondary part is chosen in such a way that the extensions of the magnets (1076-1, 1077-2; 1176-1, 1177-2; 1276, 1277) of adjacent sequence ends of two successive transport elements (510N, 510V; 610N, 610V; 710N, 710V; 810N, 810V) occupy areas (1025-1, 1025-2; 1125-1, 1125-2; 1225-1, 1225-2) on an axis (Y) which are overlap-free in a perpendicular direction to the transport direction (X);
wherein the plurality of transport elements comprises at least a first (710N) and a second (710V) group of transport elements, wherein the magnets of at least the sequence ends of the secondary parts of the transport elements of the first group (710N) occupy a first area (1025-1) on the axis (Y) perpendicular to the transport direction (X), and wherein the magnets of at least the sequence ends of the secondary parts of the transport elements of the second group (710V) occupy a second area (1125-2) on the axis (Y) perpendicular to the transport direction (X) that is overlap-free with the first area.

2. Transport system according to claim 1, wherein all magnets of the secondary parts of the transport elements of the first group occupy the first area, and all magnets of the secondary parts of the transport elements of the second group occupy the second area.

3. Transport system according to claim 1, wherein the number of magnets is uneven in each sequence (1175-1, 1175-2), and wherein respectively at least the central magnet (1179-1, 1179-2) of each sequence of the secondary parts of the transport elements of the first and the second group occupies at least the first and the second area.

4. Transport system according to one of the preceding claims, wherein the long stator has two or more linear motor strings that correspond to the overlap-free areas, that are arranged in parallel and that can be controlled independently of one another.

5. Transport system according to one of the preceding claims, further comprising a mechanical acceleration unit, in particular a driven roller or a driven conveyor belt, that is arranged on the transport track in such a way that passing transport elements can be accelerated or decelerated systematically through mechanical encroachment with the acceleration unit.

6. Transport system according to one of the preceding claims, wherein the front and back sides (410F, 410R) as well as the secondary parts (470; 1070-1, 1070-2; 1170-1, 1170-2; 1270) of the transport elements are formed in such a way that the transport elements (410; 510; 610N, 610V; 710N, 710V; 810N; 810V) can be driven into one another to the extent that there will be a minimal attainable transport spacing that is smaller than the longitudinal extension of the transport elements.

7. Transport system according to claim 6, wherein the secondary parts of the transport elements are formed in such a way, and wherein the magnets of the secondary parts of successive transport elements are arranged on the respective secondary part in such a way that the secondary part of a trailing transport element can be driven so closely towards the secondary part of a leading transport element that the magnets (1076-1, 1077-2; 1176-1, 1176-2; 1277, 1276) of the adjacent sequence ends are aligned in a direction that is perpendicular to the transport direction.

8. Transport system according to claim 6 or 7, wherein the transport elements (610N, 610V; 710N, 710V) are essentially formed in a wedge-shaped or angular way, and wherein successive transport elements are arranged on the transport track in a way as to be rotated by 180 degrees.

9. Transport system according to claim 8, wherein for each transport element (710N, 710V) all magnets of the sequence (775) of the respective secondary part are arranged in such a way that they would occupy the same area in a perpendicular direction to the transport direction in case of an identical orientation on the transport track.

10. Transport system according to claim 6 or 7, wherein the transport elements (810N, 810V) respectively have rollers (880-1 - 880-4) by means of which they are supported on the transport track, and wherein the arrangement of the rollers is inversion-symmetric.

## Revendications

1. Système de transport pour transporter des contenants (130) dans une installation de traitement de contenants, comprenant :
une voie de transport avec au moins un stator longitudinal (450) d'un moteur linéaire, et
une pluralité d'éléments de transport (410 ; 510 ; 610N, 610V ; 710N, 710V ; 810N ; 810V) pour transporter un ou plusieurs contenants (130) ;
dans lequel les éléments de transport sont agencés de manière à pouvoir se déplacer sur la voie de transport et présentent respectivement au moins une partie secondaire (470 ; 1070-1, 1070-2 ; 1170-1, 1170-2 ; 1270) pour créer une interaction magnétique avec le au moins un stator longitudinal (450), et
dans lequel au moins une séquence (575 ; 675 ; 775 ; 875 ; 1075-1, 1075-2 ; 1175-1, 1175-2 ; 1275) d'aimants permanents et/ou d'électroaimants de polarité alternée est appliquée sur la partie secondaire de sorte que l'élément de transport respectif peut être déplacé individuellement le long de la voie de transport par interaction magnétique des aimants de la séquence avec le stator longitudinal (450), **caractérisé en ce que** une dimension au moins du premier (1076-1, 1076-2 ; 1176-1, 1176-2 ; 1276) et du dernier aimant (1077-1, 1077-2; 1177-1, 1177-2; 1277) perpendiculaire à une direction de transport des contenants dans chaque séquence est réduite, et un agencement au moins du premier (1076-1, 1076-2; 1176-1, 1176-2; 1276) et du dernier aimant (1077-1, 1077-2; 1177-1, 1177-2; 1277) sur la partie secondaire respective est choisi de sorte que les dimensions des aimants (1076-1, 1077-2 ; 1176-1, 1177-2 ; 1276, 1277) d'extrémités de séquence adjacentes de deux éléments de transport successifs (510N, 510V ; 610N, 610V ; 710N, 710V ; 810N, 810V) occupent des zones (1025-1, 1025-2; 1125-1, 1125-2; 1225-1, 1225-2) sans recoupement selon un axe (Y) perpendiculaire à la direction de transport (X) ;
dans lequel :
la pluralité d'éléments de transport comprend au moins un premier (710N) et un second groupe (710V) d'éléments de transport, dans lequel les aimants au moins des extrémités de séquence des parties secondaires des éléments de transport du premier groupe (710N) occupent une première zone (1025-1) sur l'axe (Y) perpendiculaire à la direction de transport (X), et dans lequel les aimants au moins des extrémités de séquence des parties secondaires des éléments de transport du second groupe (710V) occupent une seconde zone (1125-2) sans recoupement avec la première zone sur l'axe (Y) perpendiculaire à la direction de transport (X).

2. Système de transport selon la revendication 1, dans lequel tous les aimants des parties secondaires des éléments de transport du premier groupe occupent la première zone, et tous les aimants des parties secondaires des éléments de transport du second groupe occupent la seconde zone.

3. Système de transport selon la revendication 1, dans lequel le nombre des aimants dans chaque séquence (1175-1, 1175-2) est impair, et dans lequel au moins l'aimant central (1179-1, 1179-2) de chaque séquence des parties secondaires des éléments de transport des premier et second groupes occupe au moins les première et seconde zones.

4. Système de transport selon l'une quelconque des revendications précédentes, dans lequel le stator longitudinal présente deux phases de moteur linéaire ou plus correspondant aux zones sans recoupement et guidées en parallèle, qui peuvent être commandées indépendamment l'une de l'autre.

5. Système de transport selon l'une quelconque des revendications précédentes, comprenant en outre une unité d'accélération mécanique, en particulier un rouleau entraîné ou une bande transporteuse entraînée, qui est agencé(e) sur la voie de transport de sorte que les éléments de transport qui passent peuvent être accélérés ou retardés de manière ciblée en venant en prise mécanique avec l'unité d'accélération.

6. Système de transport selon l'une quelconque des revendications précédentes, dans lequel les côtés avant et arrière (410F, 410R) ainsi que les parties secondaires (470 ; 1070-1, 1070-2 ; 1170-1, 1170-2 ; 1270) des éléments de transport sont formés de sorte que les éléments de transport (410 ; 510 ; 610N, 610V ; 710N, 710V ; 810N ; 810V) peuvent être emboîtés les uns dans les autres de sorte qu'un écart de transport minimal pouvant être obtenu est inférieur à la dimension longitudinale des éléments de transport.

7. Système de transport selon la revendication 6, dans lequel les parties secondaires des éléments de transport sont formées et les aimants des parties secondaires des éléments de transport successifs sont agencés au niveau de la partie secondaire respective de sorte que la partie secondaire d'un élément de transport arrière peut être approchée de la partie secondaire d'un élément de transport avant de sorte que les aimants (1076-1, 1077-2 ; 1176-1, 1176-2 ; 1277, 1276) des extrémités de séquence adjacentes sont situés sur une ligne perpendiculaire à la direction de transport.

8. Système de transport selon la revendication 6 ou 7, dans lequel les éléments de transport (610N, 610V ; 710N, 710V) sont sensiblement en forme de coin ou d'angle, et dans lequel des éléments de transport successifs sont agencés tournés de 180 degrés sur la voie de transport.

9. Système de transport selon la revendication 8, dans lequel, pour chaque élément de transport (710N, 710V), tous les aimants de la séquence (775) de la partie secondaire respective sont agencés de manière à occuper la même zone sur la voie de transport, avec une orientation identique, perpendiculaire à la direction de transport.

10. Système de transport selon la revendication 6 ou 7, dans lequel les éléments de transport (810N, 810V) présentent respectivement des rouleaux (880-1-880-4) au moyen desquels ils sont montés sur la voie de transport, et dans lequel l'agencement des rouleaux est symétrique par inversion.
